# EUROPEAN PATENT SPECIFICATION

(11) **EP 4 107 975 B1**
(45) Date of publication and mention of the grant of the patent: **07.01.2026**
(21) Application number: 20890613.1
(22) Date of filing: 24.03.2020
(51) Int. Cl.: H04W 4/06

(54) **DYNAMICALLY CHANGING MULTICAST/BROADCAST SERVICE DELIVERY**
DYNAMISCHE ÄNDERUNG DER MULTICAST/BROADCAST-DIENSTABLIEFERUNG
CHANGEMENT DYNAMIQUE DE DISTRIBUTION DE SERVICE DE MULTIDIFFUSION/DIFFUSION

(43) Date of publication of application: 28.12.2022
(73) Proprietor: ZTE Corporation, Shenzhen, Guangdong 518057 (CN)
(72) Inventor: QI, Tao, Shenzhen, Guangdong 518057 (CN); XIE, Feng, Shenzhen, Guangdong 518057 (CN); MA, Zijiang, Shenzhen, Guangdong 518057 (CN); CAO, Kun, Shenzhen, Guangdong 518057 (CN); XUE, Yan, Shenzhen, Guangdong 518057 (CN)
(74) Representative: Vossius & Partner Patentanwälte Rechtsanwälte mbB
(86) International application number: PCT/CN2020/080821
(87) International publication number: WO 2021/098106

(56) References cited:
- EP-A1- 3 484 193
- EP-A1- 3 723 395
- WO-A1-2019/129212
- CN-A- 109 565 860
- CN-A- 109 982 266
- US-A1- 2019 098 604
- HUAWEI,: ""Delay Optimization for mobile TV modeSwitching",", 3GPP TSG-RAN WG RAN2 #57 R2-070735,, 9 February 2007 (2007-02-09), XP050133767

## Description

### TECHNICAL FIELD

The disclosure relates generally to wireless communications, including but not limited to systems and methods for dynamically changing multicast or broadcast service delivery between multicast and unicast with service continuity.

### BACKGROUND

The standardization organization Third Generation Partnership Project (3GPP) is currently in the process of specifying a new Radio Interface called 5G New Radio (5G NR) as well as a Next Generation Packet Core Network (NG-CN or NGC). The 5G NR will have three main components: a 5G Access Network (5G-AN), a 5G Core Network (5GC), and a User Equipment (UE). In order to facilitate the enablement of different data services and requirements, the elements of the 5GC, also called Network Functions, have been simplified with some of them being software based so that they could be adapted according to need.

WO 2019/129212 A1 and EO 3 723 395 A1 are related prior art documents.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional. The example embodiments disclosed herein are directed to solving the issues relating to one or more of the problems presented in the prior art, as well as providing additional features that will become readily apparent by reference to the following detailed description when taken in conjunction with the accompany drawings. In accordance with various embodiments, example systems, methods, devices and computer program products are disclosed herein. It is understood, however, that these embodiments are presented by way of example and are not limiting, and it will be apparent to those of ordinary skill in the art who read the present disclosure that various modifications to the disclosed embodiments can be made while remaining within the scope of this disclosure.

At least one aspect is directed to a system, method, apparatus, or a computer-readable medium. A wireless communication device may receive multicast radio resource configuration information from a network. The wireless communication device may configure, according to the multicast radio resource configuration information, an air interface protocol stack of the wireless communication device. The wireless communication device may receive data of a multicast service according to the multicast radio resource configuration information.

In some embodiments, the wireless communication device may send a multicast service request to the network, prior to the receiving of the multicast radio resource configuration. In some embodiments, the wireless communication device may send the multicast service request to a multicast session management function or entity of a core network. In some embodiments, the wireless communication device may send the multicast service request to a radio access network (RAN) node.

In some embodiments, the multicast radio resource configuration information may include a multicast radio bearer configuration of a multicast radio bearer serving the multicast service, a service data adaptation protocol (SDAP) configuration, a packet data convergence protocol (PDCP) configuration, a radio link control (RLC) bearer configuration, an RLC configuration, or a multicast medium access control (MAC) and physical (PHY) layer configuration set.

In some embodiments, the multicast radio resource configuration information may include at least one operation corresponding to a multicast radio bearer configuration, an RLC bearer configuration, or a MAC and PHY layer configuration set. In some embodiments, the SDAP configuration may include a multicast service session identifier for identifying a session corresponding to the multicast service.

In some embodiments, for multicast radio bearer configured with one RLC bearer of type 1, each PDCP entity corresponding to the multicast radio bearer may be associated with an acknowledged mode (AM) RLC entity, or unacknowledged mode (UM) RLC entities for corresponding directions. In some embodiments, for multicast radio bearer configured with one RLC bearer of type 2, each PDCP entity corresponding to the multicast radio bearer may be associated with the at least one UM DL RLC entity. In some embodiments, for multicast radio bearer configured with both type 1 and type 2 RLC bearers, each PDCP entity corresponding to the multicast radio bearer may be associated with: the AM RLC entity or the UM RLC entities, and the at least one UM DL RLC entity.

In some embodiments, the type 1 RLC bearer may be configured as a point to point (PTP) attribute/type/manner (or in a PTP mode), and the type 2 RLC bearer may be configured as a point to multipoint (PTM) attribute/type/manner (or in a PTM mode). In some embodiments, a peer RLC entity of the RLC entity of type 1 of the network may serve a specific UE that receives the multicast service, and a peer RLC entity of the RLC entity of type 2 of the network may serve at least one wireless communication device that receives the multicast service.

In some embodiments, a MAC and PHY layer configuration set of the multicast service, may include at least one of: a MAC discontinuous reception (DRX) configuration corresponding to the multicast service, a cell group or cell identifier list that the multicast service is scheduled to, the multicast service associated with bandwidth part (BWP) configuration or BWP index; and a physical downlink shared data channel (PDSCH) configuration and a physical downlink control channel (PDCCH) configuration, and the Channel State Information Reference Signal (CSI-RS) configuration..

In some embodiments, there may be a mapping relationship between a physical layer identifier of the multicast service and a session identifier, and the mapping relationship may be provided through a broadcast channel and broadcast in a cell, or through dedicated signaling and sent to a specific wireless communication device. In some embodiments, the wireless communication device may identify, according to a logical channel identifier (LCID) in a received MAC protocol data unit (PDU) and a physical layer identifier or a session identity associated with the physical layer identifier, a logical channel. The wireless communication device may submit the corresponding service data of the multicast service in the MAC PDU to the identified logical channel.

In some embodiments, a logical channel identifier (LCID) corresponding to a RLC bearer may include at least two LCID values, lcid2-1 and lcid2-2, wherein a MAC entity submits service data in a received MAC PDU to a logical channel identified by Icid2-2, if the corresponding LCID value in a sub-header of the received MAC PDU is Icid2-1.

In some embodiments, a receiving RLC entity uniquely may deliver a RLC service data unit (SDU) to an associated PDCP entity, according to the served radio bearer identifier and a physical layer identifier or a session identity associated with the physical layer identifier. In some embodiments, the RLC bearer configuration and the MAC and PHY layer configuration set may be provided by: a broadcast channel and broadcast in a cell, or dedicated signaling to a specified wireless communication device.

In some embodiments, a Step 1 configuration may include at least one operation corresponding to: a multicast/broadcast radio bearer configuration, an RLC bearer configuration, or a MAC and PHY layer configuration set. In some embodiments, a Step 1 configuration includes an enabling or disabling operation of the PTP type or PTM type RLC bearer that serves multicast bearer associated with the multicast service.

In some embodiments, the wireless communication device may receive an indication of the enabling or disabling operation of the PTP type and/or PTM type RLC bearer via layer 1 signaling. The layer 1 signaling may include a MAC control element (CE) or downlink control information (DCI). The MAC CE or DCI may include a radio bearer identifier or radio bearer list or an associated identifier of the multicast service.

In some embodiments, the wireless communication device may receive an indication of the enabling or disabling operation of the configuration via RRC signaling layer 1 signaling. The layer 1 signaling comprises a MAC control element (CE) or downlink control information (DCI). The MAC CE or DCI may include an identifier of the multicast service. In some embodiments, the associated identifier is identified by a G-RNTI or session identifier to identify the multicast service, or an identifier that other wireless communication devices can use to identify the multicast service. In some embodiments, the disabling operation may include releasing a corresponding RLC bearer. In some embodiments, the disabling operation may include suspension of an RLC bearer without removing or by retaining (e.g., potentially for later use) the configuration of the RLC bearer.

In some embodiments, responsive to the suspension, the corresponding MAC entity may discard the received data that is to be delivered to the logical channel. In some embodiments, the disabling operation includes at least one of RLC entity procedure: if a reassembly timer (t-Reassembly) is running, stop and reset the t-Reassembly; discard any available RLC SDUs, RLC SDU segments, and RLC PDUs; and set state variables to initial values. In some embodiments, the enabling operation may include an RLC bearer resume or re-establishment operation.

In some embodiments, the RLC bearer resume operation may include responsive to a MAC entity receiving data that is to be delivered to a corresponding logical channel, the MAC entity delivers the data to the corresponding logical channel. In some embodiments, the RLC bearer resume operation may include reassembling received packets and starting a corresponding reassembly timer (t-Reassembly).

In some embodiments, the Step 1 configuration may include release of the MAC or PHY configuration set which is associated with the multicast service. In some embodiments, the Step 1 configuration may include suspension of the MAC or PHY configuration set which is associated with the multicast service. In some embodiments, one or more type 2 RLC bearers associated with the multicast service are suspended. In some embodiments, one or more type 2 RLC bearers associated with the multicast service are released.

In some embodiments, the Step 1 configuration may include a resume operation of the MAC or PHY configuration set which is associated with the multicast service. In some embodiments, one or more type 2 RLC bearers associated with the multicast service may be resumed or established.

In some embodiments, a step 1 configuration may include a trigger condition for a PDCP status report, and may include one of: when, for a MRB that is receiving from RLC bearer of PTM type (sometimes referred to as PTM attribute, PTM mode or PTM manner), the MRB may be configured to be receiving from RLC bearer of PTP type (sometimes referred to as PTP attribute, PTP mode or PTP manner) with operation of suspension or release of RLC bearers of type 2 or PTM type; when, for a MRB that is receiving from RLC bearer of PTM type, the MRB may be configured to be receiving from both PTM and PTP mode with operation of establishment of an RLC bearer of type 1 or PTP type; when the MAC/PHY configuration set associated with the multicast service is suspended or released; when a multicast type RLC bearer associated with the multicast radio bearer is released, deactivated or suspended, and a unicast type RLC bearer associated with the multicast radio bearer is established or exists; when a maximum Block Error Rate (BLER) associated with the multicast service is reached; or when a minimum reference signal received power (RSRP), reference signal received quality (RSRQ) or signal-to-interference-plus-noise (SINR) value based on measurement of a physical layer reference signal for the multicast service is reached; when a maximum difference between sequence numbers of PDCP PDUs from a first lost PDCP PDU to a PDCP PDU that is successfully received is reached; when a maximum number of lost PDCP PDUs or a maximum ratio of a number of lost PDCP PDUs to a total number of PDCP PDUs within a time window is reached; when a PDCP reordering timer expires: when a maximum number of packets waiting to be reordered in a PDCP entity is reached; when a PDCP Control PDU which a bit indicates the PDCP SR is received; when a timer periodically triggers the wireless communication device to perform PDCP SR for a PDCP entity associated with a bearer serving the multicast service expirer; when the network signals to the wireless communication device a MAC CE to indicate PDCP SR is needed for specific bearers of specific multicast services; and when the network provides information on a physical downlink control channel corresponding to the multicast service to signal the wireless communication device to perform PDCP SR operations.

In some embodiments, the PDCP status report content includes at least one of: a last received PDCP PDU count value or a first lost PDCP PDU count value; a bitmap of lost PDCP PDUs; or a number or ratio of the lost PDCP PDUs in a time window or a sequence number window. In some embodiments, the PDCP status report is sent in a RLC entity of type 1.

### BRIEF DESCRIPTION OF THE DRAWINGS

Various example embodiments of the present solution are described in detail below with reference to the following figures or drawings. The drawings are provided for purposes of illustration only and merely depict example embodiments of the present solution to facilitate the reader's understanding of the present solution. Therefore, the drawings should not be considered limiting of the breadth, scope, or applicability of the present solution. It should be noted that for clarity and ease of illustration, these drawings are not necessarily drawn to scale.
FIG. 1 illustrates an example cellular communication network in which techniques disclosed herein may be implemented, in accordance with an embodiment of the present disclosure;
FIG. 2 illustrates a block diagram of an example base station and a user equipment device, in accordance with some embodiments of the present disclosure;
FIG. 3 illustrates a communication diagram of an example sequence of dynamically changing multicast/broadcast service delivery between multicast and unicast with service continuity;
FIG. 4A illustrates a communication diagram of a delivery scheme from a random access network (RAN) perspective;
FIG. 4B illustrates a communication diagram of a delivery scheme from a user equipment (UE) perspective;
FIG. 5 illustrates a communication diagram of a switching scheme from a user equipment (UE) perspective;
FIG. 6 illustrates a communication diagram of a retransmission scheme from a user equipment (UE) perspective; and
FIG. 7 illustrates a flow diagram of an example method for dynamically changing multicast/broadcast service delivery between multicast and unicast with service continuity.

### DETAILED DESCRIPTION

Various example embodiments of the present solution are described below with reference to the accompanying figures to enable a person of ordinary skill in the art to make and use the present solution. As would be apparent to those of ordinary skill in the art, after reading the present disclosure, various changes or modifications to the examples described herein can be made without departing from the scope of the present solution. Thus, the present solution is not limited to the example embodiments and applications described and illustrated herein. Additionally, the specific order or hierarchy of steps in the methods disclosed herein are merely example approaches. Based upon design preferences, the specific order or hierarchy of steps of the disclosed methods or processes can be re-arranged while remaining within the scope of the present solution. Thus, those of ordinary skill in the art will understand that the methods and techniques disclosed herein present various steps or acts in a sample order, and the present solution is not limited to the specific order or hierarchy presented unless expressly stated otherwise.

The following acronyms are used throughout the present disclosure:

| Acronym | Full Name |
|---|---|
| 3GPP | 3rd Generation Partnership Project |
| 5G | 5th Generation Mobile Networks |
| 5G-AN | 5G Access Network |
| 5G gNB | Next Generation NodeB |
| AF | Application Function |
| AMF | Access and Mobility Management Function |
| AN | Access Network |
| ARP | Allocation and Retention Priority |
| AUSF | Authentication Service Function |
| CA | Carrier Aggregation |
| CM | Connected Mode |
| CMR | Channel Measurement Resource |
| CSI | Channel State Information |
| CQI | Channel Quality Indicator |
| CSI-RS | Channel State Information Reference Signal |
| CRI | CSI-RS Resource Indicator |
| CSS | Common Search Space |
| DAI | Downlink Assignment Index |
| DCI | Downlink Control Information |
| DL | Down Link or Downlink |
| DN | Data Network |
| DNN | Data Network Name |
| DRX | Discontinuous Reception |
| FR | Frequency range |
| HARQ | Hybrid Automatic Repeat Request |
| LADN | Local Area Data Network |
| MAC | Medium Access Control |
| MAC-CE | Medium Access Control (MAC) Control Element (CE) |
| MBR | Maximum Bit Rate |
| MFBR | Maximum Flow Bit Rate |
| MRB | Multimedia Resource Broker |
| NAS | Non-Access Stratum |
| NF | Network Function |
| NG-RAN | Next Generation Node Radio Access Node |
| NSSAI | Network Slice Selection Assistance Information |
| NR | Next Generation RAN |
| SDAP | Service Data Adaption Protocol |
| OFDM | Orthogonal Frequency-Division Multiplexing |
| OFDMA | Orthogonal Frequency-Division Multiple Access |
| PDCP | Packet Data Convergence Protocol |
| PCF | Policy Control Function |
| PDCCH | Physical Downlink Control Channel |
| PDSCH | Physical Downlink Shared Channel |
| PDU | Packet Data Unit |
| PHY | Physical Layer |
| PTM | Point to Multipoint |
| PTP | Point to Point |
| PUCCH | Physical uplink control channel |
| PLMN | Public Land Mobile Network |
| PMI | Precoding Matrix Indicator |
| PPCH | Physical Broadcast Channel |
| QoS | Quality of Service |
| RAN | Radio Access Network |
| RAN CP | Radio Access Network Control Plane |
| RAT | Radio Access Technology |
| RB | Resource Bearer |
| RE | Resource Element |
| RLC | Radio Link Control |
| RRC | Radio Resource Control |
| RV | Redundant Version |
| SM NAS | Session Management Non Access Stratum |
| SMF | Session Management Function |
| SRS | Sounding Reference Signal |
| SS | Synchronization Signal |
| SSB | SS/PBCH Block |
| TB | Transport Block |
| TC | Transmission Configuration |
| TRP | Transmission/Reception Point |
| UCI | Uplink Control Information |
| UDM | Unified Data Management |
| UDR | Unified Data Repository |
| UE | User Equipment |
| UL | Up Link or Uplink |

### 1. Mobile Communication Technology and Environment

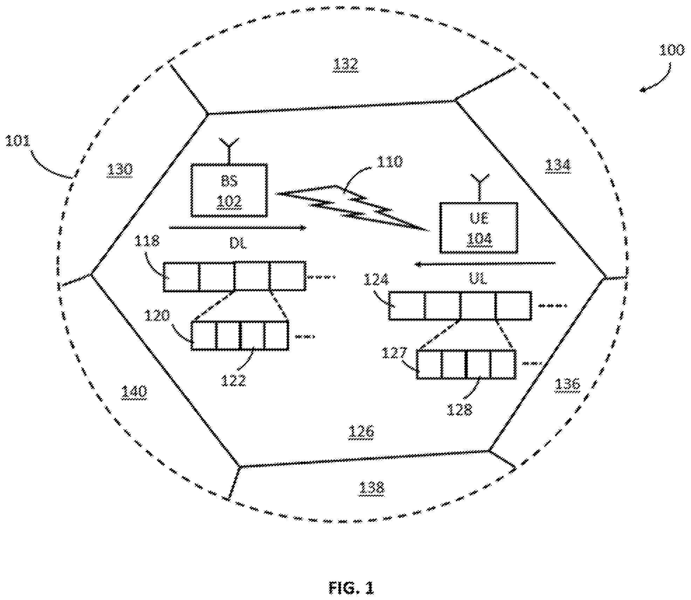

FIG. 1 illustrates an example wireless communication network, and/or system, 100 in which techniques disclosed herein may be implemented, in accordance with an embodiment of the present disclosure. In the following discussion, the wireless communication network 100 may be any wireless network, such as a cellular network or a narrowband Internet of things (NB-loT) network, and is herein referred to as "network 100." Such an example network 100 includes a base station 102 (hereinafter "BS 102"; also referred to as wireless communication node) and a user equipment device 104 (hereinafter "UE 104"; also referred to as wireless communication device) that can communicate with each other via a communication link 110 (e.g., a wireless communication channel), and a cluster of cells 126, 130, 132, 134, 136, 138 and 140 overlaying a geographical area 101. In Figure 1, the BS 102 and UE 104 are contained within a respective geographic boundary of cell 126. Each of the other cells 130, 132, 134, 136, 138 and 140 may include at least one base station operating at its allocated bandwidth to provide adequate radio coverage to its intended users.

For example, the BS 102 may operate at an allocated channel transmission bandwidth to provide adequate coverage to the UE 104. The BS 102 and the UE 104 may communicate via a downlink radio frame 118, and an uplink radio frame 124 respectively. Each radio frame 118/124 may be further divided into sub-frames 120/127 which may include data symbols 122/128. In the present disclosure, the BS 102 and UE 104 are described herein as non-limiting examples of "communication nodes," generally, which can practice the methods disclosed herein. Such communication nodes may be capable of wireless and/or wired communications, in accordance with various embodiments of the present solution.

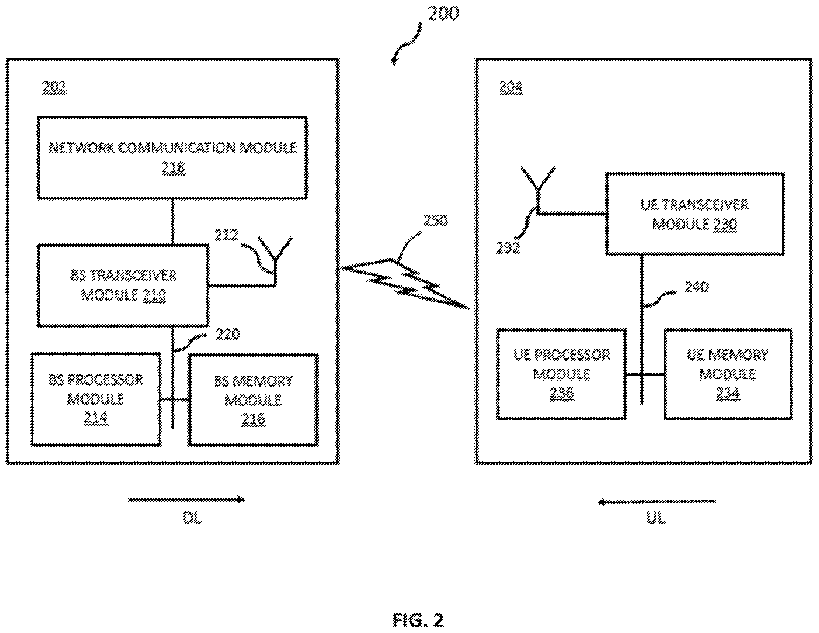

FIG. 2 illustrates a block diagram of an example wireless communication system 200 for transmitting and receiving wireless communication signals (e.g., OFDM/OFDMA signals) in accordance with some embodiments of the present solution. The system 200 may include components and elements configured to support known or conventional operating features that need not be described in detail herein. In one illustrative embodiment, system 200 can be used to communicate (e.g., transmit and receive) data symbols in a wireless communication environment such as the wireless communication environment 100 of Figure 1, as described above.

System 200 generally includes a base station 202 (hereinafter "BS 202") and a user equipment device 204 (hereinafter "UE 204"). The BS 202 includes a BS (base station) transceiver module 210, a BS antenna 212, a BS processor module 214, a BS memory module 216, and a network communication module 218, each module being coupled and interconnected with one another as necessary via a data communication bus 220. The UE 204 includes a UE (user equipment) transceiver module 230, a UE antenna 232, a UE memory module 234, and a UE processor module 236, each module being coupled and interconnected with one another as necessary via a data communication bus 240. The BS 202 communicates with the UE 204 via a communication channel 250, which can be any wireless channel or other medium suitable for transmission of data as described herein.

As would be understood by persons of ordinary skill in the art, system 200 may further include any number of modules other than the modules shown in Figure 2. Those skilled in the art will understand that the various illustrative blocks, modules, circuits, and processing logic described in connection with the embodiments disclosed herein may be implemented in hardware, computer-readable software, firmware, or any practical combination thereof. To clearly illustrate this interchangeability and compatibility of hardware, firmware, and software, various illustrative components, blocks, modules, circuits, and steps are described generally in terms of their functionality. Whether such functionality is implemented as hardware, firmware, or software can depend upon the particular application and design constraints imposed on the overall system. Those familiar with the concepts described herein may implement such functionality in a suitable manner for each particular application, but such implementation decisions should not be interpreted as limiting the scope of the present disclosure

In accordance with some embodiments, the UE transceiver 230 may be referred to herein as an "uplink" transceiver 230 that includes a radio frequency (RF) transmitter and a RF receiver each comprising circuitry that is coupled to the antenna 232. A duplex switch (not shown) may alternatively couple the uplink transmitter or receiver to the uplink antenna in time duplex fashion. Similarly, in accordance with some embodiments, the BS transceiver 210 may be referred to herein as a "downlink" transceiver 210 that includes a RF transmitter and a RF receiver each comprising circuity that is coupled to the antenna 212. A downlink duplex switch may alternatively couple the downlink transmitter or receiver to the downlink antenna 212 in time duplex fashion. The operations of the two transceiver modules 210 and 230 may be coordinated in time such that the uplink receiver circuitry is coupled to the uplink antenna 232 for reception of transmissions over the wireless transmission link 250 at the same time that the downlink transmitter is coupled to the downlink antenna 212. Conversely, the operations of the two transceivers 210 and 230 may be coordinated in time such that the downlink receiver is coupled to the downlink antenna 212 for reception of transmissions over the wireless transmission link 250 at the same time that the uplink transmitter is coupled to the uplink antenna 232. In some embodiments, there is close time synchronization with a minimal guard time between changes in duplex direction.

The UE transceiver 230 and the base station transceiver 210 are configured to communicate via the wireless data communication link 250, and cooperate with a suitably configured RF antenna arrangement 212/232 that can support a particular wireless communication protocol and modulation scheme. In some illustrative embodiments, the UE transceiver 210 and the base station transceiver 210 are configured to support industry standards such as the Long Term Evolution (LTE) and emerging 5G standards, and the like. It is understood, however, that the present disclosure is not necessarily limited in application to a particular standard and associated protocols. Rather, the UE transceiver 230 and the base station transceiver 210 may be configured to support alternate, or additional, wireless data communication protocols, including future standards or variations thereof.

In accordance with various embodiments, the BS 202 may be an evolved node B (eNB), a serving eNB, a target eNB, a femto station, or a pico station, for example. In some embodiments, the UE 204 may be embodied in various types of user devices such as a mobile phone, a smart phone, a personal digital assistant (PDA), tablet, laptop computer, wearable computing device, etc. The processor modules 214 and 236 may be implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration.

Furthermore, the steps of a method or algorithm described in connection with the embodiments disclosed herein may be embodied directly in hardware, in firmware, in a software module executed by processor modules 214 and 236, respectively, or in any practical combination thereof. The memory modules 216 and 234 may be realized as RAM memory, flash memory, ROM memory, EPROM memory, EEPROM memory, registers, a hard disk, a removable disk, a CD-ROM, or any other form of storage medium known in the art. In this regard, memory modules 216 and 234 may be coupled to the processor modules 210 and 230, respectively, such that the processors modules 210 and 230 can read information from, and write information to, memory modules 216 and 234, respectively. The memory modules 216 and 234 may also be integrated into their respective processor modules 210 and 230. In some embodiments, the memory modules 216 and 234 may each include a cache memory for storing temporary variables or other intermediate information during execution of instructions to be executed by processor modules 210 and 230, respectively. Memory modules 216 and 234 may also each include non-volatile memory for storing instructions to be executed by the processor modules 210 and 230, respectively.

The network communication module 218 generally represents the hardware, software, firmware, processing logic, and/or other components of the base station 202 that enable bidirectional communication between base station transceiver 210 and other network components and communication nodes configured to communication with the base station 202. For example, network communication module 218 may be configured to support internet or WiMAX traffic. In a typical deployment, without limitation, network communication module 218 provides an 802.3 Ethernet interface such that base station transceiver 210 can communicate with a conventional Ethernet based computer network. In this manner, the network communication module 218 may include a physical interface for connection to the computer network (e.g., Mobile Switching Center (MSC)). The terms "configured for," "configured to" and conjugations thereof, as used herein with respect to a specified operation or function, refer to a device, component, circuit, structure, machine, signal, etc., that is physically constructed, programmed, formatted and/or arranged to perform the specified operation or function.

The Open Systems Interconnection (OSI) Model (referred to herein as, "open system interconnection model") is a conceptual and logical layout that defines network communication used by systems (e.g., wireless communication device, wireless communication node) open to interconnection and communication with other systems. The model is broken into seven subcomponents, or layers, each of which represents a conceptual collection of services provided to the layers above and below it. The OSI Model also defines a logical network and effectively describes computer packet transfer by using different layer protocols. The OSI Model may also be referred to as the seven-layer OSI Model or the seven-layer model. In some embodiments, a first layer may be a physical layer. In some embodiments, a second layer may be a Medium Access Control (MAC) layer. In some embodiments, a third layer may be a Radio Link Control (RLC) layer. In some embodiments, a fourth layer may be a Packet Data Convergence Protocol (PDCP) layer. In some embodiments, a fifth layer may be a Radio Resource Control (RRC) layer. In some embodiments, a sixth layer may be a Non Access Stratum (NAS) layer or an Internet Protocol (IP) layer, and the seventh layer being the other layer.

### 2. Systems and Methods for Dynamically Changing Multicast/Broadcast Service Delivery Between Multicast and Unicast with Service Continuity

The broadcast technology of cellular networks can hardly provide service reliability in air interface transmission. For example, the existing 3GPP SC-PTM (single cell point to multi-point) and MBSFN (Multimedia Broadcast multicast/broadcast service Single Frequency Network) do not provide HARQ or ARQ feedback and retransmission. It is only possible for the UE to switch between unicast transmission and broadcast transmission through application-layer solutions when the UE reception quality is degraded, and the service reliability /service continuity are required.

At the same time, for the SC-PTM service, if the mobile UE finds that the neighboring cell does not provide broadcast services, the UE can initiate a unicast connection between the server and the UE at the application layer, so that the service can continue during the UE's movement. However, the limitation of the application layer is that: from confirming the service (the multicast or broadcast service cannot be provided in the target cell) to receiving the Multicast and Broadcast Service data in the target cell in unicast, a longer service interruption time may be introduced. In some services, such as the MCPTT (mission critical push to talk) for public safety, the decline in traffic quality and even interruptions are intolerable.

A potential solution is to directly implement switching between the point-to-point transmission (PTP, or unicast type) and point-to-multipoint transmission (PTM, or multicast type) of a multicast/broadcast service on the access network side of the cellular network. This technical goal has become a consensus in the new work item in 3GPP: NR MBS (3GPP New Work Item, New Work Item on NR support of Multicast and Broadcast Services, RP-193248). Presented herein are systems and methods for switching of the delivery mode (e.g., unicast or multicast) in the access network for multicast/broadcast service. The solution is primarily discussed herein for multicast/broadcast service in the 3GPP system, in which the receiving UE can be identified by the access network. The terms multicast, broadcast, and multicast/broadcast may be used interchangeably.

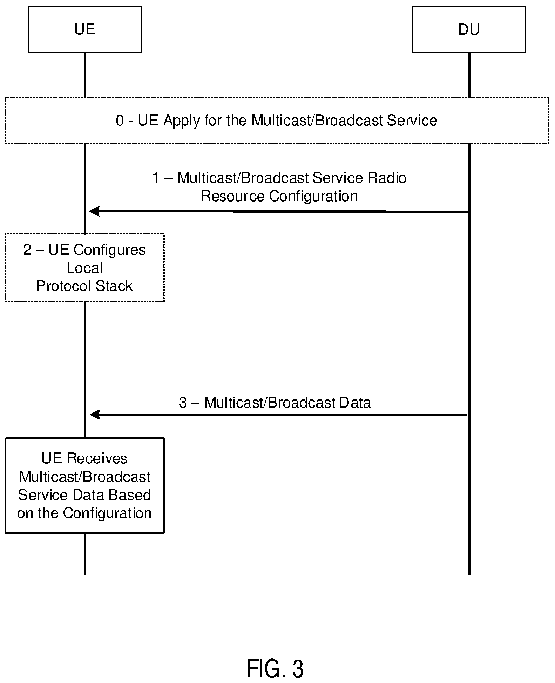

Referring now to FIG. 3, a communication diagram of an example sequence of dynamically changing multicast/broadcast service delivery mode between multicast and unicast with service continuity. At step 0, the UE (e.g., UE 104) may request or apply for the multicast/broadcast service from the network. At step 1, UE may receive the configuration (sometimes referred to as a Step 1 configuration) to correctly receive the multicast/broadcast service data. This could also be a reconfiguration based on the interaction between UE and network that happened prior to configuration. The reconfiguration could enable dynamic change of multicast/broadcast service delivery between multicast (PTM) and unicast (PTP) with service continuity for a given UE. At Step 2, based on the received configuration, the UE configures its local protocol stack, and receives the Multicast and Broadcast Service data in the UE air interface (sometimes referred herein as a Step 2 configuration). The multicast/broadcast service data transmission could have happened before the one specific UE applies for it, in case the multicast/broadcast service has already been applied for by another UE.

### A. Information Carried by UE in Step 0

For the multicast/broadcast service, the UE is to apply for a service from the network, so that the 3GPP system allocates corresponding resources for the multicast/broadcast service, and the data is sent to the access network node and cell where the UE is located. The UE is to carry a service identifier that can identify the service in the application procedure. The multicast/broadcast service identifier is at least one or a combination of the following options: session ID, IP multicast address (with source or without source address), and TMGI (Temporary Mobile Group Identity), the ID of the NAS (non access stratum) layer or application layer to identify the service, the G-RNTI (Group Radio Network Temporary Identity), and other possible AS layer IDs to identify the service. The above identifier or combination of identifiers is used by the network and the UE to uniquely identify a multicast/broadcast service.

Among them, the session ID may be allocated by the UE itself and used to uniquely identify a multicast/broadcast service session within the UE. In addition, the UE may carry other service description information in the service request (or application for the service), including S-NSSAI (Single Network Slice Selection Assistance Information) to identify the slice information of the service, and DNN (Data Network Name) to identify the gateway information. In some implementations, the receiver of the above request may be a multicast/broadcast service session management function or a network entity of the core network, or it may be an access network node, such as gNB or more specifically gNB-CU (central unit).

### B. Configuration Content in Step 1

The configuration provided by the network in step 1 (sometimes referred to as step 1 configuration) may include Multicast/Broadcast Radio Bearer (MRB) configuration which serves the multicast/broadcast service, SDAP configuration, PDCP configuration, RLC bearer configuration, RLC configuration, and the Multicast/Broadcast MAC/PHY configuration set. The configuration may also include operations to the Multicast Radio Bearer configuration, RLC bearer configuration, the Multicast/Broadcast MAC/PHY configuration set. The operation can be addition, modification, suspension and release.

The UE performs configuration of the local protocol stack according to the above configuration, for example, establishing a MRB, or modifying an existing MRB, releasing or suspending an existing MRB; establishing an RLC bearer, or modifying an existing RLC bearer, suspending or releasing an existing RLC bearer. The MRB configuration includes SDAP configuration and PDCP configuration. The RLC bearer configuration further includes corresponding RLC configuration and MAC logical channel configuration. The UE establishes the corresponding MRB after receiving the configuration, or establishes the corresponding MRB when the UE receives the first multicast/broadcast service data packet or the first MAC PDU corresponding to the multicast/broadcast service. For example, in the reception of a multicast/broadcast service, the UE establishes a corresponding RLC entity and a PDCP entity only after receiving the first MAC PDU. The UE may also establish the corresponding RLC entity and PDCP entity after receiving the establish operation for the first time.

There might be MRBs serving a specific multicast/broadcast service. For a certain multicast/broadcast service, the UE may receive the operation to a list of the MRB which is to establish or to modify or to release the MRB. The configuration for a specific MRB can be provided in step 1. The configuration includes the configuration of the SDAP and the PDCP entity associated with the MRB. For a certain MRB of a certain multicast/broadcast service, the UE may receive an addition, modification, suspension or release operation of an RLC bearer associated with a certain MRB. For a certain MRB of a multicast/broadcast service, one or two RLC bearers may be associated in different scenarios, and the network completes the above-mentioned modification of association through step 1. The above step 1 configuration also includes the MAC/PHY related configuration associated with the multicast/broadcast service. The configuration in step 1 is described in further detail below.

In the above configuration, the MRB configuration includes the SDAP configuration, in which includes the session ID that identifies the multicast/broadcast service session. The session ID can be used to identify subsequent configuration information, so that the UE can determine that subsequent configuration is associated with a specific multicast/broadcast service. The session ID may be a session ID carried by the signaling from UE when applying for a multicast/broadcast service in step 0.

The MRB configuration further includes an MRB identity (MRB ID) that is used to identify a unique MRB among multiple radio bearers serving the multicast/broadcast service. The service data flow corresponding to a multicast/broadcast service is sent from the core network to the access network node in the granularity of the QoS Flow. The QoS Flow data are mapped to one or more MRBs by the SDAP entity associated with the multicast/broadcast service (note that each QoS Flow can only be mapped to one specific MRB), and each MRB is associated with one PDCP entity.

The above RLC bearer configuration may include the served radio bearer (identified by the MRB ID), the RLC entity configuration, and the MAC logical channel (identified by the Logical channel ID, LCID) corresponding to the RLC bearer. The PDCP entity associated with the MRB may be associated with one or both of two types of RLC bearers, and the two types of RLC bearers are defined as type 1 and type 2 respectively. Type 1 RLC bearers may be may be point to point (PTP) or unicast type, and Type 2 RLC bearers may be point to multi-point (PTM) or multicast type. RLC entities associated with type 1 RLC bearers is referred to as type 1 RLC entities, and RLC entities associated with type 2 RLC bearers is referred to as type 2 RLC entities.

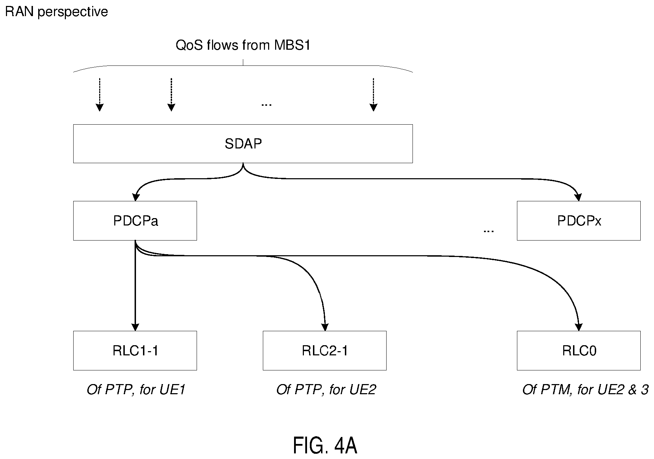

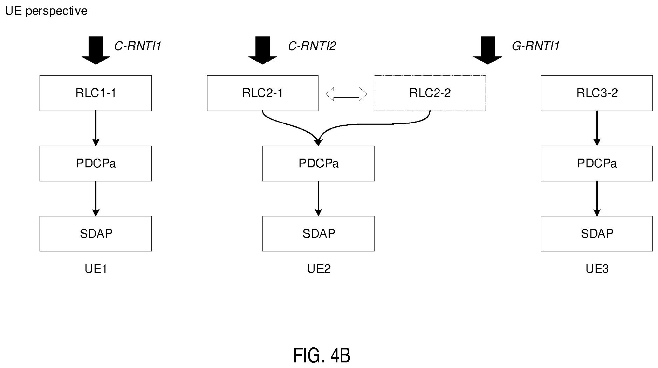

Referring now to FIGs. 4A and 4B, illustrated are communication diagrams of a delivery scheme from a radio access network (RAN) perspective and from a user equipment (UE) perspective. From a network perspective, the difference between the two types of RLC entities is that the UE's type 1 RLC entities (RLC1-1 & RLC2-1) whose peer RLC entities in the network (as depicted in the network side, RLC1-1, RLC2-1) may serve specific UEs (e.g., UE1, UE2) only. UE's type 2 RLC entities (RLC2-2, RLC3-2) whose peer RLC entities in the network (RLC0) may serve at least one UE (e.g., UE2, UE3). The whole or part of the configuration of RLC entity or the RLC bearer may be shared by multiple UEs. In other words, multiple UEs receiving the multicast/broadcast service in PTM mode may share the same peer RLC entity on the network side. For example, the network side can generate and send RLC PDUs received by multiple UEs, through a shared RLC entity. For the same MRB associated with the same multicast/broadcast service, its PDCP PDU is duplicated and delivered to all RLC entities associated with the MRB. There might be only one MRB for one or more QoS Flow for the same multicast/broadcast service in one CU.

The configuration may further include a MAC/PHY configuration set of the multicast/broadcast service. The MAC/PHY configuration set further includes at least one of the following configurations: the MAC DRX configuration corresponding to the multicast/broadcast service, and a physical layer identifier (e.g., G-RNTI) of the multicast/broadcast service that is used to monitor on the physical layer (the G-RNTI, or Group Radio Network Temporary Identity is used to identify the physical layer transmission of the multicast/broadcast service or multicast/broadcast service group); Cell group or cell ID list associated with multicast/broadcast service, Channel State Information measurement configuration (CSI Measurement Configuration), BWP configuration or BWP index associated with the multicast/broadcast service in a specific cell. The above BWP configuration may further include: the frequency domain location and bandwidth where the multicast/broadcast service is scheduled on the physical resource, as well as the Sub-carrier Spacing and cyclic prefix (CP), and the physical downlink shared data channel (PDSCH) configuration and physical downlink control channel (PDCCH) configuration.

The association between PDCP entity associated with the MRB that serves the multicast/broadcast service and the RLC entities is at least one of the following depending on the multicast/broadcast service receiving characteristic of the UE or MRB characteristic or RLC mode.

For MRB configured with one RLC bearer of type 1, each PDCP entity may be associated with one AM (Acknowledged Mode) RLC entity, or two UM (Unacknowledged Mode) RLC entities (one for each direction), each comprising or corresponding to an RLC entity of type 1 (or type 1 RLC entity). In this case, an MRB serving the multicast/broadcast service may be associated with a type 1 RLC bearer. The associated RLC entity and the RLC bearer is of PTP type. The RLC entity may be of AM attribute or of UM attribute. In this case, the UE is receiving the MRB data of the multicast/broadcast service in the PTP manner. The network may configure the corresponding RLC entity as AM attribute or UM attribute, according to the characteristics of the service. For example, in the QoS characteristics corresponding to an MRB of a multicast/broadcast service, if the packet delay budget is high and the packet error rate is low, the corresponding RLC entity can be configured to be AM mode. If the packet delay budget is low and the packet error rate is high, the corresponding RLC entity can be configured to be UM mode.

For MRB configured with one RLC bearer of type 2, each PDCP entity may be at least associated with one UM downlink (DL) RLC entity comprising or corresponding to an RLC entity of type 2 (or type 2 RLC entity). In this case, an MRB serving the multicast/broadcast service may be associated with a type 2 RLC bearer. The associated RLC entity and the RLC bearer may be of PTM type. The RLC entity may be of UM attribute. In this case, the UE is receiving the MRB data of the multicast/broadcast service in the PTM manner. The network may configure the receiving behavior of the corresponding DL RLC entity as UM attribute.

For MRB configured with both type 1 and type 2 RLC bearers, each PDCP entity may be associated with: one AM RLC entity or two UM RLC entities (one for each direction), and at least one UM DL RLC entity. In this case, an MRB serving the multicast/broadcast service may be associated with a type 1 and a type 2 RLC bearer. The type 1 RLC entity associated with the RLC bearer may be of AM attribute or of UM attribute. The type 2 RLC entity associated with the RLC bearer may be of UM attribute.

In different scenarios, a type 1 RLC entity provides different functions. For example, in some scenarios, a type 1 RLC entity, if there are any, is responsible for receiving the initial transmission data from the peer PDCP entity in the network of a certain MRB serving the multicast/broadcast service in a PTP manner. The type 2 RLC entity, if there are any, serving the same MRB is responsible for receiving the initial transmission data from the peer PDCP entity in the network of the same MRB serving the multicast/broadcast service. The duplicated PDCP PDU is discarded at the PDCP layer. If in order delivery is needed, the reordering is carried out at the PDCP layer. The receiving reliability is expected to be enhanced for the corresponding MRB by enabling both type 1 and type 2 RLC bearer to receive the initial transmission data from the peer PDCP entity in the network of a certain MRB serving the multicast/broadcast service.

In another scenario, a type 1 RLC entity, if there are any, is responsible for receiving retransmission from the peer PDCP entity in the network of a certain MRB serving the multicast/broadcast service in a PTP manner, while the type2 RLC entity is responsible for receiving initial transmission from the peer PDCP entity in the network of a certain MRB serving the multicast/broadcast service in a PTP manner. In the same scenario, the type1 RLC entity may be responsible for uplink transmission of the PDCP status report of the MRB serving the multicast/broadcast service. In the above configuration, the type 1 RLC bearer and the type 2 RLC bearer may be independently configured. For example, the type 1 RLC and the type 2 RLC may be of different RLC modes.

### C. RLC Bearer Configuration-Related Operations

In different scenarios, the UE may receive different configurations and corresponding operations provided by the network and receives a specific multicast/broadcast service under different receiving modes (PTM or PTP or both). The UE can switch from one mode to another, or receive of the service based on two types of modes simultaneously. The above mode switch process relies on the same MRB of the multicast/broadcast service being associated with different types of RLC bearers (type1 only, type2 only, or both). Based on the solution above, flexible switching among PTP, PTM, and both PTP/PTM in the reception of an MRB of the multicast/broadcast service may be supported.

In order to implement the above switching process flexibly and efficiently, it may be necessary to further refine the signaling design so that the delay of the above conversion process is lower. This section focuses on the related operations in the configuration. Before expanding on the description of operations, there are two types of operation granularity:
(1) the switch operation of the receiving mode (including the switch between PTP or PTM and its combination) may be an operation to a specific multicast/broadcast service. Thus, the operation applies to the all MRBs serving the multicast/broadcast service. All Multicast Radio Bearers serving the multicast/broadcast service will perform the corresponding related operations. This operation is based on a "per multicast/broadcast service" granularity; and
(2) the switch operation of the receiving mode (including the switch between PTP or PTM and its combination) is an operation for a specific MRB or part of the MRBs serving a multicast/broadcast service, that is based on a "per MRB" operating granularity.

In some embodiments, the RLC bearer of a certain MRB serving the multicast/broadcast service in the configuration received by the UE is a type1 attribute, and the UE performs reception of the multicast/broadcast service according to the RLC bearer included in the cell group configuration in the reconfiguration message. In this case, the UE receives the multicast/broadcast service in a PTP manner. The process is as follows. The UE receives data according to the UE-specific physical layer identifier, such as C-RNTI (Cell-Radio Network Temporary Identifier) or Configured Scheduling RNTI (CS-RNTI). Then, the MAC entity delivers the MAC PDU to the appropriate logical channel (LCH) according to the LCID in the data packet and the RLC bearer configuration, and then the corresponding RLC entity and PDCP entity will receive and process the multicast/broadcast service data in the corresponding layer.

In some embodiments, the RLC bearer of a certain MRB serving the multicast/broadcast service in the configuration received by the UE is of type 2 attribute, and the UE receives the multicast/broadcast service in a PTM manner. The process is as follows. The UE detects and receives the multicast/broadcast service data according to the physical layer identifier G-RNTI associated with the multicast/broadcast service in the physical layer, then the MAC entity delivers the MAC PDU to the corresponding LCH according to the LCID in the data packet, and then the corresponding RLC entity and PDCP entity will receive and process the multicast/broadcast service data in the corresponding layer.

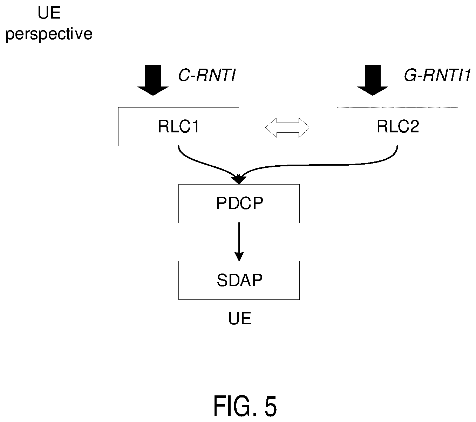

Referring now to FIG. 5, illustrated is a communication diagram of a switching scheme from a user equipment (UE) perspective. With the same MRB, by associating different types of RLC bearers and their associated MAC/PHY configuration set, and a combination of different types of RLC bearers, the UE may switch between different receiving modes or receive at the same time using different modes. Based on the description in the previous section, the step1 configuration provided by the network may include the Session ID corresponding to the multicast/broadcast service in the SDAP configuration and the MRB ID in the MRB configuration; and the RLC bearer configuration associated with the MRB may include PTP-type RLC bearer or PTM type RLC bearer, or the combination of the two. The above switching may be implemented through the related operations of the configuration content included in the Step1 configuration. The operations includes addition, modification, suspension, and release operations corresponding to the at least one of the following configuration: MRB configuration (including the PDCP entity configuration), RLC bearer configuration (including the RLC entity configuration), and MAC/PHY configuration set.

In one scenario, such as the reception of a certain multicast/broadcast service for a certain UE, the network configure the UE from PTM reception to PTP reception, either in the granularity of the multicast/broadcast service or specific MRB serving the multicast/broadcast service. The configuration of step 1 may include the release of PTM type RLC bearers and the addition of PTP type RLC bearers for all MRBs or specific MRB serving the multicast/broadcast service. On the contrary, if the network configure the UE from PTP reception to PTM reception, the configuration of step 1 may include the release of the PTP type RLC bearer and the addition of the PTP type RLC bearer for all MRBs or specific MRB serving the multicast/broadcast service.

In order to lower the above-mentioned signaling delay or lower the overhead of the signaling, the network may add a corresponding indication field, e.g., enabling or disabling bit in the configuration of each or part of the above-mentioned RLC bearer. For example, the RLC bearer associated with each MRB serving the multicast/broadcast service corresponds to two possible states: enabled or disabled. At this time, the RLC bearer associated with specific MRB that serves the multicast/broadcast service may correspond to the following three possible states (if '1' stands for "enabled" and "0" stands for "disabled" in the description field):
- the RLC bearer of the PTP type is enabled, and the RLC bearer of the PTM type is disabled, and the description field may be present as "1" and "0" respectively. In this case, the MRB receives the multicast/broadcast service in the PTP manner.
- the RLC bearer of the PTP type is disabled and the RLC bearer of the PTM type is enabled, and the description field may be present as "0" and "1" respectively. In this case the MRB receives the multicast/broadcast service in the PTM mode.
- both the RLC bearer of the PTP type and the PTM type are enabled, and the description field may be present as "1" and "1" respectively. In this case, the MRB receives the multicast/broadcast service in a manner of PTP combined with PTM. Corresponding to different scenarios, the PTP type RLC bearer is responsible for different functions. For example, in the PDCP retransmission scenario to improve reliability, the PTP type RLC bearer is responsible for receiving PDCP retransmission data and/or transferring the PDCP status report in the uplink to the network. In the mode switching scenario, however, the PTP RLC entity is responsible for receiving the initial transmission and/or retransmission from the peer PDCP entity in the network of a certain MRB serving the multicast/broadcast service and/or sending the PDCP status reports of the corresponding MRB.

It should be noted that such enabling/disabling indication mechanism may be for the PTM RLC bearer, or such indication is separately indicated for PTP RLC bearer and PTM RLC bearer.

The above enabling and/or disabling operation can be indicated in lower layer. For example, the MAC CE (MAC Control Element) or layer 1 downlink control information (DCI) signaling sent to the UE contains the identifier of the multicast/broadcast service (identified by G-RNTI or Session ID, or other ID that UEs can use to identify the multicast/broadcast service), and/or the bearer identifier of the multicast/broadcast service, and the indication field on enable or disable. If the operation is a per multicast/broadcast service, there is no need to carry the bearer identifier of the multicast/broadcast service, such as the MRB ID of the bearer.

If the above RLC bearer's enable or disable information is indicated RRC signaling, it is also indicated in the RRC signaling if the operation is per multicast/broadcast service, or per MRB or MRB list that serves multicast/broadcast service.

In some embodiments, the disabling operation corresponding to the RLC bearer indicates the releasing the RLC bearer or suspension of the RLC bearer.

The above-mentioned disabling operation may correspond to the RLC bearer release operation in the existing standard, that is, the operation further corresponds to the release of the associated RLC entity or entities and the release of the corresponding LCH.

The above-mentioned disabling operation may correspond to the RLC bearer suspension operation. The suspension of the RLC bearer corresponds to the suspension operation of the corresponding RLC entity and the release of the LCH corresponding to the RLC entity. If the corresponding LCH is released, the corresponding MAC entity discards the data that is to be delivered to the corresponding LCH.

The above suspension operations of the RLC entity further include the following possible operations and combinations of related operations (t-Reassembly is the timer for reassembly, it is used by the receiving RLC entity to detect loss of RLC PDUs at lower layer):
- if t-Reassembly is running, stop and reset t-Reassembly;
- discard all RLC SDUs, RLC SDU segments, and RLC PDUs, if any; and
- set all state variables to the initial value.

In some embodiments, the enabling operation corresponding to the RLC bearer indicates the re-establishment the associated RLC entity. The RLC bearer re-establishment operation corresponds to the following: after the MAC receives the data that is to be delivered to the corresponding LCH, it delivers it to the corresponding LCH. After re-establishment is taken, the RLC entity enters the working state from suspension: reassembly of received data packets and start the corresponding reassembly timer (t-Reassembly).

The configuration of Step 1 may include the release of the MAC/PHY configuration set associated with the multicast/broadcast service. With such configuration, the receiving UE's MAC entity no longer monitors the G-RNTI of the multicast/broadcast service. The MAC may take further operations including: stopping reception of the service in the physical layer at least in the PTM mode, releasing the HARQ processes associated with the G-RNTI, and flushing the HARQ buffer, and releasing the DRX configuration of the multicast/broadcast service. The receiving UE releases other MAC/PHY configuration set associated with the multicast/broadcast service.

The configuration of Step 1 may include suspension operation for the MAC/PHY configuration set associated with the multicast/broadcast service. With such configuration, the receiving UE's MAC entity no longer monitors the G-RNTI of the multicast/broadcast service. The MAC may take further operations including: stopping reception of the service in the physical layer at least in the PTM mode, releasing the HARQ processes associated with the G-RNTI, and flushing the HARQ buffer, and releasing the DRX configuration of the multicast/broadcast service. While the configuration of the MAC/PHY configuration set associated with the multicast/broadcast service is suspended or lifted, the configuration itself is stored by the UE and not released.

The configuration of Step 1 may include a re-establishment operation of the MAC/PHY configuration set associated with the multicast/broadcast service. With the re-establishment operation, the UE-side MAC entity resumes monitoring the G-RNTI of the multicast/broadcast service and receiving the service data according to the physical layer configuration. The MAC may take further operations including: receiving the service data in the PTM mode on the air interface according to the stored MAC/PHY configuration set. At the same time, all or part of the type 2 RLC bearers associated with the multicast/broadcast service on the UE side are re-established.

If all type2 RLC bearers corresponding to a multicast/broadcast service associated with a multicast/broadcast service are released, then the MAC/PHY configuration set associated with the multicast/broadcast service are suspended or released. If at least one MRB associated with the type 2 RLC bearer is in the receiving status, the MAC/PHY configuration set associated with the multicast/broadcast service is not suspended or released. If any type2 RLC bearer is added or re-established, then the MAC/PHY configuration set associated with the multicast/broadcast service is re-established.

The RLC bearer configuration with the above PTM attributes and the related MAC/PHY configuration set can be provided via a multicast channel or a broadcast channel, and broadcast in the cell; it can also be provided by dedicated signaling, that is, sent from the network in a point-to-point manner to specific UEs. In some scenarios, the configuration received by the UE may include an enabling indication of the RLC bearer configuration with the PTM attribute, and then the UE obtain the corresponding PTM type RLC configuration and/or MAC/PHY configuration set associated with the multicast/broadcast service through a broadcast channel. More specifically, the enabling indication may further provide scheduling information of the broadcast channel, such as frequency domain, time domain, scheduling period and time offset value, or a combination of the above information.

In order to reduce service interruption to the UE when the above two types of RLC bearers are switched for the associated MRB or all MRBs of the multicast/broadcast service, in the configuration provided by the network, a timer variable t_Switch is provided. The UE starts a timer after receiving the configuration, and performs the operation to release or suspend a certain RLC bearer after the timer expires.

In order to reduce service interruption to the UE when the above two types of RLC bearers are switched for the associated MRB or all MRBs of the multicast/broadcast service, in the configuration provided by the network, the release or suspension of the RLC bearers will trigger a PDCP status report. For example, when the UE switches an MRB of a certain multicast/broadcast service from PTM or PTP & PTM reception, to PTP reception, if the PDCP status report is enabled in the corresponding network configuration, the UE will be triggered to perform PDCP status report.

### D. Specific Receiving Behavior Based on RLC Bearer Configuration

During the reception of the multicast/broadcast service, the UE performs the following related configuration on the MAC/PHY according to the G-RNTI associated with the MAC/PHY configuration set. The G-RNTI value corresponding to the multicast/broadcast service and related MAC configurations such as DRX configuration, and the serving cell ID or serving cell ID list, may be provided to the MAC entity. When the MAC entity has G-RNTI, the MAC entity shall for each TTI based on the DRX configuration during which it monitors PDCCH for G-RNTI. If a downlink assignment for this TTI and this Serving Cell or Serving Cell list has been received on the PDCCH for the MAC entity's G-RNTI: attempt to decode the received data; if the data which the MAC entity attempted to decode was successfully decoded for this transport block: deliver the decoded MAC PDU to the disassembly and demultiplexing entity.

The configuration of the RLC bearer included in Step1 may further include the associated LCID, and the radio bearer identity (RB ID) to the MRB that is served by the RLC bearer.

For the radio bearer identity (RB ID) of the MRB, there are two alternatives according to whether the RB ID space is shared among the multicast/broadcast services and also the unicast services:
(1) from the perspective of the UE, an independent RB ID space may be used among the multicast/broadcast services received by the UE, and unicast service of the UE. The RB ID space between multicast/broadcast services may be differentiated based on the G-RNTI or the session ID associated with the G-RNTI. That is to say, the RB ID for MRBs for different multicast/broadcast services can be the same. Based on such assumption, the receiving RLC entity submit the RLC SDU to the associated PDCP entity according to two parameters: RB ID of the MRB that the RLC bearer serves in the RLC bearer configuration, and the G-RNTI or the session ID associated with the received service data.
(2) From the perspective of the UE, there is a shared RB ID space among the multicast/broadcast services received by the UE, and unicast service of the UE. That is to say, the RB ID for MRBs for different multicast/broadcast services cannot be the same. Based on such assumption, the receiving RLC entity submit the RLC SDU to the associated PDCP entity according to one parameters: RB ID of the MRB that the RLC bearer serves in the RLC bearer configuration.

For the LCID associated with the type 2 or PTM RLC bearer configuration, there are two alternatives according to whether the LCID space is shared among the multicast/broadcast services and also the unicast services:
(1) the LCID corresponding to type 2 RLC bearer is of a single value: lcid2. From the perspective of each UE, an independent LCID space may be used among the multicast/broadcast services received by the UE, and unicast service of the UE. The LCID space between multicast/broadcast services may be differentiated based on the G-RNTI or the session ID associated with the G-RNTI. That is to say, the LCID for MRBs for different multicast/broadcast services can be the same. Based on such assumption, the receiving MAC entity submit the service data in a received MAC PDU to the associated logical channel according to two parameters: LCID associated with the received service data in the received MAC PDU, and the G-RNTI or the session ID associated with the received service data.
(2) the LCID corresponding to type 2 RLC bearer is a pair of values: lcid2-1, and lcid2-2. From the perspective of each UE, a shared LCID space may be used among the multicast/broadcast services received by the UE, and unicast service of the UE. That is to say, the LCID for MRBs for different multicast/broadcast services cannot be the same. Based on such assumption, the receiving MAC entity submit service data in a received MAC PDU to a logical channel identified by lcid2-2, if a LCID value in a sub-header of the associated service data in the received MAC PDU is lcid2-1.

### E. Retransmission Scenarios

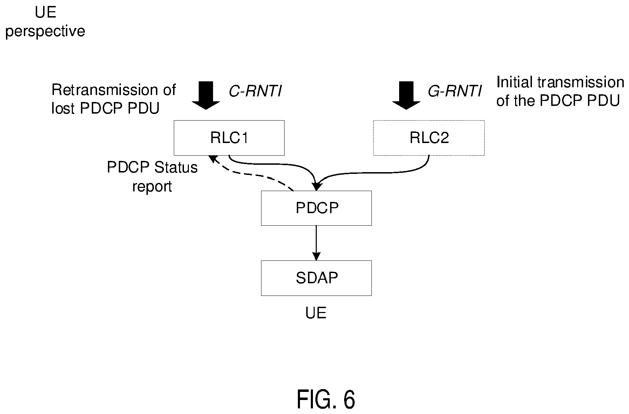

Referring now to FIG. 6, illustrated is a diagram of retransmission scheme from a user equipment (UE) perspective. Based on the dual RLC bearer (type1 RLC bearer and type 2 RLC bearer) associated with a MRB that serves the multicast/broadcast services, retransmission from the peer PDCP entity in the network of for the MRB can be realized. The initial transmission from the peer PDCP entity in the network for the MRB is received by the type 2 RLC bearer which is of PTM type. With or without the UE's feedback, the retransmission of the multicast/broadcast service data from the peer PDCP entity in the network for the MRB is received by the type 1 RLC bearer which is of PTP type. As depicted, RLC entity corresponding to the type 1 RLC bearer is RLC1, the RLC entity corresponding to the type 2 RLC bearer is RLC2. The physical layer identity used by the MAC entity to monitor the multicast/broadcast service is G-RNTI, while physical layer identity used by the MAC entity to monitor the PTP transmission is C-RNTI or CS-CRNTI.

The UE generates a corresponding PDCP status report (PDCP SR) according to the receiving status of the corresponding PDCP entity. The UE sends the PDCP SR to the peer PDCP entity in the network side through the type 1 or PTP type RLC bearer. The network-side PDCP entity may maintain a UE-specific reception status context for the UE. The context records the PDCP status report received by the UE, including the lost PDCP PDU SN information. Based on the PDCP SR, the network retransmits the lost PDCP PDU for the UE.

### F. PDCP Status Report

In the switch scenario and the retransmission scenario of the aforementioned description, one of the key factors is the PDCP status report provided by the UE. For example, the network may determines the appropriate receiving mode (PTP or PTM or both) for the UE according to the status report of one or more specific MRB that serves the multicast/broadcast services. In the retransmission scenario, the network may use the UE's status report to determine the PDCP SN that was not successfully sent to the UE, so that retransmission can be taken.

The triggering conditions of the relevant PDCP status report and the content of the status report are listed below:
1 - For a specific MRB that is receiving from RLC bearer of PTM type, the MRB is then configured to be receiving from RLC bearer of PTP with operation of suspension or release of RLC bearers of type 2 or PTM type. Such configuration may trigger the receiving PDCP to do a PDCP SR, in case the PDCP SR is enabled for the MRB.
2 - For a specific MRB that is receiving from RLC bearer of PTM type, the MRB is then configured to be receiving from both PTM and PTP mode with operation of establishment of an RLC bearer of type 1 or PTP type. Such configuration may trigger the receiving PDCP to do a PDCP SR, in case the PDCP SR is enabled for the MRB.
3 - The suspension or release of the MAC/PHY configuration set associated with the Multicast and Broadcast Service may cause losing some data. In case there are still available RLC bearer which is of type 1 or PTP type associated with the MRB, the receiving PDCP may be triggered to do a PDCP SR.
4 - The trigging of PDCP SR in case of the degradation of receiving quality of one MRB or the multicast/broadcast service in PTM mode allows the network to be aware of the receiving quality as early as possible. The network could take any action to improve the receiving quality like receiving mode switch, enabling the UE receiving the multicast/broadcast service in PTP mode. Therefore it is possible for the UE to monitor the receiving quality in the MAC layer directly, like BLER (Block Error Rate) of the transport block. Once a configured BLER threshold is reached, the PDCP SR is triggered. The configuration provided by the network may include a BLER threshold of the MAC layer or its derived value, such as a threshold of a result after filtering in a certain time window t_Window. If a certain threshold is reached, the UE is triggered to perform a PDCP SR on a PDCP entity associated with a PTP type RLC bearer, so that the network is aware of the receiving status of the corresponding MRB or the multicast/broadcast service.
5 - The network may configure a corresponding measurement reference signal, such as a Channel State Information Reference Signal associated with the multicast/broadcast service. If the measurement result of the associated with the configured reference signal is lower than a certain threshold, a PDCP SR is triggered.
6 - The PDCP SR can also be triggered directly by the receiving statistics of the PDCP layer. The network defines a threshold of the PDCP sequence numbers (SN) gap value or length. The PDCP SN gap stands for the difference between the SN from the first lost PDCP PDU, to a subsequent PDCP PDU that was successfully received. Once the threshold is reached, the PDCP SR is triggered. Other receiving statistics of the PDCP could be defined, e.g., the percentage of lost PDCP PDUs in the total PDCP PDUs within a configured time window or SN length window (t_Windows, or SN_Window). Once the value of the percentage of lost PDCP PDUs in the total PDCP PDUs within a configured time window or SN length window (t_Windows, or SN_Window) is reached, PDCP SR is triggered. The number of packets waiting to be reordered N in the PDCP entity can also provide the receiving status of the MRB. If the value N is higher than a configured threshold, PDCP SR is triggered. When the PDCP reordering timer expires, it directly triggers the PDCP SR. In the MRB configuration, the network may add an enable bit that triggers the PDCP SR based on the reordering timer expiration. If the bit is TRUE, then it allow the UE to trigger PDCP SR under the above conditions.
7 - A timer based The network is configured with a timer that periodically triggers the UE to perform PDCP SR for a PDCP entity associated with a bearer serving the multicast/broadcast service. The configuration of the timer may include the trigger period of the timer and/or a time domain offset. Upon receiving the configuration, a timer to trigger the PDCP SR is set based on the value of T_polling plus the time domain offset.
8 - The PDCP SR can also be triggered by the network. For example, the network may be able to trigger the PDCP SR triggered by a PDCP Control PDU. The Control PDU can use an indication field like 1 bit to indicate to the UE that the UE needs to perform a PDCP SR for the receiving PDCP entity where the Control PDU is received.
9 - Other forms of signaling from the network side. For example, the network instructs the UE to perform PDCP SR on specific MRB of specific multicast/broadcast service through MAC CE. The above information including the MRB ID and the multicast/broadcast service identity (G-RNTI or session ID or TMGI or identity that uniquely identifies the multicast/broadcast service). Moreover, the network may indicate on the physical downlink control channel PDCCH on the physical layer to instruct the UE to perform PDCP SR for the specified MRB by the MRB ID for the specified multicast/broadcast service identified by the G-RNTI or session ID or TMGI or any identity that uniquely identifies the multicast/broadcast service. It should be noted that the G-RNTI itself may be able to be identified by the DCI in the PDCCH itself.

The content of the status report of the corresponding PDCP entity should include at least one of the following:
- the last received PDCP PDU count in order or the first missing count
- bitmap of lost PDCP PDUs,
- the number or the ratio of the lost PDCP PDU in a time window (t_Window) or an SN window

### G. Where to Send the PDCP SR When There Are Two Associated RLC Entities

The MRB serving the multicast/broadcast service can be associated with two types of RLC bearers (type 1 or PTP, type 2 or PTM type respectively). In the existing 3GPP specification, when more than one RLC entity is associated with the PDCP entity, one of the RLC entity is defined as the primary entity for transmitting PDCP control PDUs (including PDCP SR). In the scenario described above (e.g., the mode switching among PTP and PTM and PTM/PTP to deliver the multicast/broadcast service) and the retransmission scenario, PDCP Control PDU like PDCP SR may also be needed. In both cases, the PDCP SR is sent on the type 1 or PTP type RLC bearer or the RLC entity associated with the PTP type RLC bearer. The RLC entity associated with the PTP type RLC bearer is the primary RLC entity. For RB that serves the multicast/broadcast service, which is associated with more than one RLC entity, submit the PDCP status report to the type 1 RLC entity or the PTP type RLC entity.

### H. Dynamically Changing Multicast/Broadcast Service Delivery

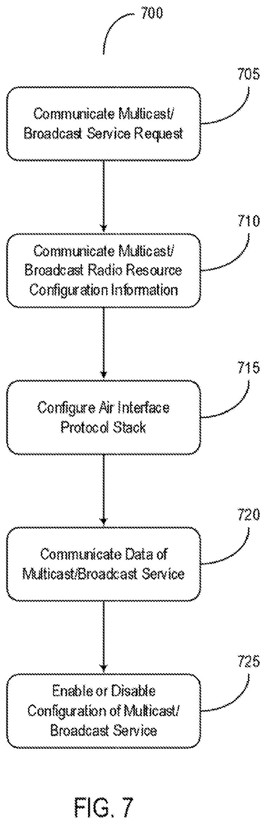

Referring now to FIG. 7, illustrated is a flow diagram of a method 700 of dynamically changing multicast/broadcast service delivery between multicast and unicast with service continuity. The method 700 may be implemented using or performed by the components described herein in conjunction with FIGs. 1-6. In overview, the method 700 may include communicating a multicast/broadcast service request (705). The method 700 may include communicating a multicast/broadcast radio resource configuration information (710). The method 700 may include configuring air interface protocol stack (715). The method 700 may include communicating data of multicast/broadcast service (720). The method 700 may include enabling or disabling the configuration or part of the configuration of the multicast/broadcast service (725).

In further detail, the method 700 may include communicating a multicast/broadcast service request (705). The terms multicast, broadcast, and multicast/broadcast may be used interchangeably. In some embodiments, a wireless communication device (e.g., the UE 104) may provide, transmit, or otherwise send the multicast/broadcast service request to a network (e.g., the network 100). The multicast/broadcast service request may be to initiate multicast/broadcast service for the wireless communication device. The sending of the multicast/broadcast service request may be sent prior to receiving of a multicast/broadcast radio resource configuration.

In some embodiments, the wireless communication device may provide, transmit, or otherwise send the multicast/broadcast service request to a multicast/broadcast session management function or entity of the 3GPP core network. In some embodiments, the wireless communication device may provide, transmit, or otherwise send the multicast/broadcast service request to a radio access network (RAN) node. The RAN node may be, for example, a gNB or a gNB-CU.

The method 700 may include communicating a multicast/broadcast radio resource configuration information (710). In response to receipt of the multicast/broadcast service request, the network (or the recipient node) may generate and return the multicast/broadcast radio resource configuration information to the wireless communication device. The wireless communication device may in turn receive the multicast radio resource configuration information from the network (or the node that received the multicast/broadcast service request). In some embodiments, the multicast radio resource configuration information may define, specify, or otherwise include: a multicast/broadcast radio bearer (MRB) configuration of a multicast/broadcast radio bearer serving the multicast/broadcast service; a service data adaptation protocol (SDAP) configuration; a packet data convergence protocol (PDCP) configuration; a radio link control (RLC) bearer configuration, an RLC configuration; or a multicast medium access control (MAC) and physical (PHY) layer configuration set.

In some embodiments, the SDAP configuration may include a multicast/broadcast service session identifier. The multicast/broadcast service session identifier may identify a session corresponding to the multicast/broadcast service. The multicast/broadcast service session identifier may further uniquely identify a session corresponding to the multicast/broadcast service inside the wireless communication device.

In some embodiments, there may be a mapping relationship between the MRB configuration and the MAC/PHY configuration set. The MRB configuration may be identified by the session ID while the MAC/PHY configuration set may be identified by the G-RNTI or other identity associated with the multicast/broadcast service in the physical layer.

The mapping relationship may be provided or included through a broadcast downlink channel and broadcast in a cell (e.g., cell 126). The mapping relationship may be provided or included in dedicated signaling and sent to a specific UE (e.g., the UE 104).

In some embodiments, the multicast/broadcast radio resource configuration information may specify one or more types of RLC bearers for the multicast/broadcast service. A multicast/broadcast radio bearer may be configured to receive from one RLC entity of type 1 RLC bearer. In this case, the PDCP entity may be associated with one acknowledged mode (AM) RLC entity, or two unacknowledged mode (UM) RLC entities. A multicast/broadcast radio bearer may be configured to receive from one RLC entity of type 2 RLC bearer. In this case, the PDCP entity may be associated with one UM downlink RLC entity. A multicast/broadcast radio bearer may be configured to receive from two RLC entities, each PDCP entity may be associated with: one AM RLC entity or two UM RLC entities, and one UM downlink RLC entity.

In some embodiments, the type 1 RLC bearer may be configured as a point to point (PTP) attribute. In some embodiments, the peer RLC entity of type 1 at the network side may serve a specific UE. In some embodiments, the type 2 RLC bearer may be configured as a point to multipoint (PTM) attribute. In some embodiments, the peer RLC entity of type 2 at the network side may serve at least one UE at a peer RLC entity of the network.

In some embodiments, a type 2 RLC bearer may be associated with a MAC/PHY layer configuration set of the multicast/broadcast service. The configuration set may define, identify, or include a MAC discontinuous reception (DRX) configuration corresponding to the multicast/broadcast service. The configuration set may also define, identify, or include a cell group or cell identifier list that the multicast/broadcast service is scheduled to. The configuration set may also define, identify, or include the bandwidth part (BWP) configuration or BWP index associated with the multicast/broadcast service. The configuration set may define, identify, or include a physical downlink shared data channel (PDSCH) configuration and a physical downlink control channel (PDCCH) configuration.

The method 700 may include configuring air interface protocol stack (715). In accordance with the multicast/broadcast radio resource configuration information, the wireless communication device may configure the air interface protocol stack of the wireless communication device. The air interface protocol stack may define communication links between the wireless communication device and other radio access network nodes in the network (e.g., for the multicast/broadcast radio service). In some embodiments, the multicast/broadcast radio resource configuration information may include: an operation defining or corresponding to a multicast/broadcast radio bearer configuration; an operation defining or corresponding to an RLC bearer configuration; or an operation defining or corresponding to a MAC/PHY layer configuration set. In configuring the air interface protocol stack, the wireless communication device may execute one or more operations defined by the multicast radio resource configuration information.

In some embodiments, the wireless communication device may determine or identify, according to a logical channel identifier (LCID) in a received MAC protocol data unit (PDU) and a physical layer identifier including the G-RNTI associated with the multicast/broadcast service or a session identity associated with the physical layer identifier or the multicast/broadcast service, a logical channel to communicate or receive the service data of the multicast/broadcast service. The logical channel identifier (LCID) may identify or reference a RLC bearer for the multicast/broadcast service. The LCID may include at least two LCID values, lcid2-1 and lcid2-2. A MAC entity may submit service data in a received MAC PDU to a logical channel identified by lcid2-2, if a LCID value of the service data in a sub-header or the header of the received MAC PDU is lcid2-1.

In some embodiments, a receiving RLC entity may uniquely deliver a RLC service data unit (SDU) to an associated PDCP entity, according to the served radio bearer identifier in the RLC bearer configuration and a physical layer identifier including the G-RNTI associated with the multicast/broadcast service or a session identity associated with the physical layer identifier or the multicast/broadcast service. In some embodiments, the RLC bearer configuration and the MAC/PHY layer configuration set may be received from or provided by a broadcast channel and broadcast in a cell (e.g., the cell 126). In some embodiments, the RLC bearer configuration and the MAC or PHY layer configuration set may be received from or provided via dedicated signaling.

In some embodiments, the wireless communication device may perform a step 2 configuration to configure the air interface protocol stack. In some embodiments, a step 1 configuration may identify or include one or more operations. The operations for the step 1 configuration may include an operation corresponding to a multicast/broadcast radio bearer configuration, an operation corresponding to an RLC bearer configuration, or an operation corresponding to a MAC/PHY configuration set. The step 1 may include receiving the configuration itself. The step 2 configuration may include applying or performing the configuration on the air interface protocol stack.

In some embodiments, a step 1 configuration may include a trigger condition for a PDCP status report corresponding to the PDCP entity associated with the multicast/broadcast radio bearer.

The trigger condition may include when the multicast/broadcast radio bearer is configured to be receiving from RLC bearer of PTP with operation of suspension or release of RLC bearers of type 2 or PTM type. In such case, the wireless communication device is receiving the service data of the multicast/broadcast radio bearer from the PTM mode to the PTP mode. In case the PTM or type 2 RLC bearer is released, there might be data lost and, therefore a PDCP status report is to be issued.

The trigger condition may include when the multicast/broadcast radio bearer is configured to be receiving from RLC bearer of PTM type, the MRB may then be configured to be receiving from both PTM and PTP mode with operation of establishment of an RLC bearer of type 1 or PTP type. Such configuration may trigger the receiving PDCP to do a PDCP SR, in case the PDCP SR is enabled for the MRB. When, for a multicast radio bearer that is receiving from a RLC bearer of PTM type, the multicast radio bearer may be configured to be receiving from a RLC bearer of PTP type in conjunction with a suspension or release of RLC bearers of type 2 or PTM type. When, for a multicast radio bearer that is receiving from a RLC bearer of PTM type, the multicast radio bearer may be configured to be receiving from both PTM and PTP modes in conjunction with an establishment of an RLC bearer of type 1 or PTP type.

When the UE receives the bearer data in PTP mode, the UE may be triggered to report the bearer reception status. The trigger condition may also include when a maximum Block Error Rate (BLER) associated with the multicast/broadcast service of the MAC/PHY layer is reached (e.g., within a time window). The trigger condition may also include when a minimum reference signal received power (RSRP), reference signal received quality (RSRQ) or signal-to-interference-plus-noise (SINR) value based on measurement of a physical layer reference signal for the multicast/broadcast service is reached.

The trigger condition may also include when a maximum difference (e.g., PDCP sequence number) between sequence numbers (SNs) of PDCP PDUs from a first lost PDCP PDU to a PDCP PDU that is successfully received is reached. The trigger condition may also include when a maximum number of lost PDCP PDUs or a maximum ratio of a number of lost PDCP PDUs to a total number of PDCP PDUs within a time window (t_window) is reached. The trigger condition may include when a PDCP reordering timer expires. The trigger condition may include when a maximum number of packets waiting to be reordered in a PDCP entity is reached (e.g., then the PDCP SR is triggered).

The trigger condition may include when a PDCP status report (SR) is triggered by a PDCP Control PDU in which a bit indicates the PDCP SR is needed. The Control PDU can use a bit to indicate that the UE needs to perform a PDCP SR for the receiving PDCP entity where the Control PDU is located. The trigger condition may include when a timer periodically triggers the wireless communication device to perform PDCP SR for a PDCP entity associated with a bearer serving the multicast/broadcast service. The configuration of the timer can include the trigger period (T_polling) of the timer and the time domain offset. Upon receiving the configuration, a timer to trigger the PDCP SR is set based on the value of T_polling plus the time domain offset.

The trigger condition may include when the network signals to the wireless communication device a MAC CE to indicate PDCP SR is needed for specific bearers of specific multicast/broadcast services. For example, in the MAC CE includes the MRB ID and the multicast/broadcast service identity (G-RNTI or session ID or TMGI or identity that uniquely identifies the multicast/broadcast service).

Moreover, the network may indicate on the physical downlink control channel PDCCH on the physical layer to instruct the UE to perform PDCP SR for the specified MRB by the MRB ID for the specified multicast/broadcast service. The multicast/broadcast service may be identified by the G-RNTI or session ID or TMGI or any identity that uniquely identifies the multicast/broadcast service. It should be noted that the G-RNTI itself may be able to be identified by the DCI in the PDCCH itself.

The trigger condition may include when the network provides information on a physical downlink control channel (e.g., PDCCH) corresponding to the multicast/broadcast service to signal the wireless communication device to perform PDCP SR operations on a PDCP SR-enabled bearer. The MRB ID may be carried in the downlink control information.

The method 700 may include communicating data of multicast/broadcast service (720). The wireless communication device may access, identify, or receive the data of the multicast/broadcast service according to the multicast radio resource configuration information. In some embodiments, the wireless communication device may communicate the data of the multicast/broadcast service via the air interface protocol stack configured using the multicast radio resource configuration information. The communication of the data of the multicast/broadcast service may commence or initiate responsive to the configuration of the air interface protocol stack.

In some embodiments, the PDCP status report may be communicated in conjunction with the data of the multicast/broadcast service. In some embodiments, the PDCP status report content may include a last received PDCP PDU count value or a first lost PDCP PDU count value; a bitmap of lost PDCP PDUs; and a number or ratio of the lost PDCP PDUs in a time window or a sequence number window. In some embodiments, the PDCP status report may be sent in a RLC entity of type 1 or the RLC entity of PTP type.

The method 700 may include enabling or disabling configuration of the multicast/broadcast service (725). The configuration to communication of the data of the multicast/broadcast service to the wireless communication device may be enabled or disabled in accordance with the step 1 configuration. The enabling or disabling may be to at least a portion of the configuration of the multicast/broadcast service. In some embodiments, a Step1 configuration may include an enabling or disabling operation of a configuration of two states of a RLC bearer. The RLC bearer may correspond to each multicast bearer serving the multicast/broadcast service.

In some embodiments, the wireless communication device may identify or receive an indication of the enabling or disabling operation of the configuration via layer 1 signaling. The layer 1 signaling may include a MAC control element (CE) or downlink control information (DCI). The MAC CE or DCI may include an identifier of the multicast/broadcast service, and a radio bearer identifier or radio bearer list corresponding to the multicast/broadcast service. The identifier of the multicast/broadcast service may be G-RNTI or Session ID, or other identifier that the wireless communication devices can use to identify the multicast/broadcast service.

In some embodiments, the step 1 configuration may include an enabling or disabling operation of two states of a RLC bearer. The RLC bearer may correspond to each multicast bearer serving the multicast/broadcast service. The disabling of a RLC bearer corresponds to the operation of release or suspension. In some embodiments, one or more type 2 RLC bearers associated with the multicast/broadcast service are suspended or released. In some embodiments, the disabling operation may be releasing a corresponding RLC bearer. The disabling operation may include releasing a corresponding RLC entity corresponding to the RLC bearer and a corresponding logical channel. The releasing may not apply to contents, settings, or configuration associated with the RLC bearer, and may delete these contents, settings, or configuration (from being used later). In some embodiments, the disabling operation may include: if a reassembly timer (t-Reassembly) is running, stop and reset the t-Reassembly. In some embodiments, the disabling operation may include: discard any available RLC SDUs, RLC SDU segments, and RLC PDUs. In some embodiments, the disabling operation may include set state variables to initial values.

In some embodiments, the step 1 configuration may include releasing of the MAC or PHY configuration set which is associated with the multicast/broadcast service. The UE-side MAC entity may no longer monitor the G-RNTI of the multicast/broadcast service. The UE-side MAC entity may stop receiving the PTM mode of the service on the air interface. The UE-side MAC may release the HARQ process associated with the G-RNTI, and flushes the HARQ buffer, and releases the DRX configuration of the multicast/broadcast service, and the UE may not save the MAC/PHY configuration set associated with the multicast/broadcast service. The UE may delete these contents, settings, or configuration associated with the multicast/broadcast service (from being used later)

In some embodiments, the disabling operation may be the suspension of an RLC bearer without removing or by retaining (e.g., potentially for later use) the configuration of the RLC bearer. The suspension of the RLC bearer may correspond to the suspension or release of the logical channel corresponding to the RLC entity, and the suspension of the corresponding RLC entity. The suspension may apply to contents, settings, or configuration associated with the RLC bearer, but maintain or save these contents, settings, or configuration (to be used later when resumed/enabled). In some embodiments, responsive to the suspension which includes suspension of a logical channel corresponding to the RLC bearer, a corresponding MAC entity may receive data that is to be delivered to the corresponding logical channel and discards the received data.

In some embodiments, the step 1 configuration may include suspension of the MAC or PHY configuration set which is associated with the multicast/broadcast service. The UE-side MAC entity may no longer monitor the G-RNTI of the multicast/broadcast service. The UE-side MAC entity may stop receiving the PTM mode of the service on the air interface. The UE-side MAC entity may release the HARQ process associated with the G-RNTI, and flush the HARQ buffer, and releases the DRX configuration of the multicast/broadcast service, and the UE saves the MAC or PHY configuration set associated with the multicast/broadcast service (to be used later when resumed/enabled).

In some embodiments, the enabling operation may include an RLC bearer resume or establishment operation. In some embodiments, the RLC bearer resume operation may include responsive to a MAC entity receiving data that is to be delivered to a corresponding logical channel, the MAC entity delivers the data to the corresponding logical channel. In some embodiments, the RLC bearer resume operation may include reassembling received packets and starting a corresponding reassembly timer (t-Reassembly). In some embodiments, the step 1 configuration may include a resume operation of the MAC or PHY configuration set which is associated with the multicast/broadcast service. In some embodiments, one or more type 2 RLC bearers associated with the multicast/broadcast service are restored or established.

While various embodiments of the present solution have been described above, it should be understood that they have been presented by way of example only, and not by way of limitation. Likewise, the various diagrams may depict an example architectural or configuration, which are provided to enable persons of ordinary skill in the art to understand example features and functions of the present solution. Such persons would understand, however, that the solution is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described illustrative embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques. To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according embodiments of the present solution.

Additionally, memory or other storage, as well as communication components, may be employed in embodiments of the present solution. It will be appreciated that, for clarity purposes, the above description has described embodiments of the present solution with reference to different functional units and processors. However, it will be apparent that any suitable distribution of functionality between different functional units, processing logic elements or domains may be used without detracting from the present solution. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the embodiments described in this disclosure will be readily apparent to those skilled in the art, and the general principles defined herein can be applied to other embodiments without departing from the scope of this disclosure. Thus, the disclosure is not intended to be limited to the embodiments shown herein, but is to be accorded the widest scope consistent with the novel features and principles disclosed herein, as recited in the claims below.

## Claims

1. A method, comprising:
receiving, by a wireless communication device, multicast radio resource configuration information including a radio link control, RLC, bearer configuration from a network, wherein the RLC bearer configuration includes at least one of a plurality of RLC bearer types, the plurality of RLC bearer types including i) a RLC bearer of type 1 being of a point-to-point, PTP, type and ii) a RLC bearer of type 2 being of a point-to-multipoint, PTM, type; and
configuring, by the wireless communication device according to the multicast radio resource configuration information, an air interface protocol stack of the wireless communication device,
wherein:
for a multicast radio bearer configured with the RLC bearer of type 1, each PDCP entity corresponding to the multicast radio bearer is associated with an acknowledged mode, AM, RLC entity, or unacknowledged mode, UM, RLC entities for corresponding directions; and
for a multicast radio bearer configured with the RLC bearer of type 2, each PDCP entity corresponding to the multicast radio bearer is associated with the at least one UM DL RLC entity; and
for a multicast radio bearer configured with both the RLC bearer of type 1 and the RLC bearer of type 2, each PDCP entity corresponding to the multicast radio bearer is associated with: the AM RLC entity or the UM RLC entities, and the at least one UM DL RLC entity.

2. The method of claim 1, comprising sending, by the wireless communication device, a multicast service request to the network, prior to the receiving of the multicast radio resource configuration.

3. The method of claim 2, comprising sending, by the wireless communication device, the multicast service request to a multicast session management function or entity of a core network.

4. The method of claim 2, comprising sending, by the wireless communication device, the multicast service request to a radio access network, RAN, node.

5. The method of claim 1, wherein the multicast radio resource configuration information includes a PDCP configuration.

6. The method of claim 1, wherein the multicast radio resource configuration information includes at least one operation corresponding to a multicast radio bearer configuration, or a MAC and PHY layer configuration set associated with the multicast service.

7. The method of claim 5, wherein the multicast radio resource configuration information includes a service data adaptation protocol, SDAP, configuration, wherein the SDAP configuration includes a multicast service session identifier for identifying a session corresponding to the multicast service.

8. The method of claim 1, wherein a peer RLC entity of the network to the RLC entity associated with the RLC bearer of type 1 serves a specific wireless communication device that receives the multicast service, and a peer RLC entity of the network to the RLC entity associated with the RLC bearer of type 2 serves at least one wireless communication device that receives the multicast service.

9. The method of claim 5,
wherein a multicast medium access control MAC and physical PHY layer configuration set of the multicast service includes at least one of: a MAC discontinuous reception, DRX, configuration corresponding to the multicast service, a cell identifier list that the multicast service is scheduled to, a bandwidth part, BWP, index associated with the multicast service, or a physical downlink shared data channel, PDSCH, configuration and a physical downlink control channel, PDCCH, configuration; or
wherein there is a mapping relationship between a physical layer identifier of the multicast service and a session identifier, and the mapping relationship is provided through dedicated signaling to a specific wireless communication device; or
wherein a logical channel identifier, LCID, corresponding to an RLC bearer includes at least two LCID values, lcid2-1 and Icid2-2, wherein a MAC entity submits service data in a received MAC PDU to a logical channel identified by Icid2-2, if the corresponding LCID value in a sub-header of the received MAC PDU is Icid2-1; or
wherein the RLC bearer configuration and the MAC and PHY layer configuration set are provided through a broadcast channel and broadcast in a cell, or through dedicated signaling to a specific wireless communication device; or
wherein a Step 1 configuration comprises the multicast radio resource configuration information.

10. A wireless communication device, comprising:
at least one processor configured to:
receive, via a receiver, multicast radio resource configuration information including a radio link control, RLC, bearer configuration from a network, wherein the RLC bearer configuration includes at least one of a plurality of RLC bearer types, the plurality of RLC bearer types including i) a RLC bearer of type 1 of being of a point-to-point, PTP, type and ii) a RLC bearer of type 2 being of a point-to-multipoint, PTM, type ; and
configure, according to the multicast radio resource configuration information, an air interface protocol stack of the wireless communication device,
wherein:
for a multicast radio bearer configured with the RLC bearer of type 1, each PDCP entity corresponding to the multicast radio bearer is associated with an acknowledged mode, AM, RLC entity, or unacknowledged mode, UM, RLC entities for corresponding directions; and
for a multicast radio bearer configured with the RLC bearer of type 2, each PDCP entity corresponding to the multicast radio bearer is associated with the at least one UM DL RLC entity; and
for a multicast radio bearer configured with both the RLC bearer of type 1 and the RLC bearer of type 2, each PDCP entity corresponding to the multicast radio bearer is associated with: the AM RLC entity or the UM RLC entities, and the at least one UM DL RLC entity.

11. The wireless communication device of claim 10, wherein the multicast radio resource configuration information includes a PDCP configuration.

## Patentansprüche

1. Verfahren, umfassend:
Empfangen von Multicast-Funkressourcenkonfigurationsinformationen, einschließlich einer Funkverbindungssteuerungs-Trägerkonfiguration, RLC-Trägerkonfiguration, durch eine Vorrichtung zur drahtlosen Kommunikation von einem Netzwerk, wobei die RLC-Trägerkonfiguration mindestens einen von einer Vielzahl von RLC-Trägertypen einschließt, wobei die Vielzahl von RLC-Trägertypen i) einen RLC-Träger vom Typ 1 vom Typ Punkt-zu-Punkt, PTP, und ii) einen RLC-Träger vom Typ 2 vom Typ Punkt-zu-Mehrpunkt, PTM, einschließt; und
Konfigurieren eines Luftschnittstellenprotokollstapels der Vorrichtung zur drahtlosen Kommunikation durch die Vorrichtung zur drahtlosen Kommunikation gemäß den Multicast-Funkressourcenkonfigurationsinformationen,
wobei:
bei einem Multicast-Funkträger, der mit dem RLC-Träger vom Typ 1 konfiguriert ist, jede dem Multicast-Funkträger entsprechende PDCP-Entität einer RLC-Entität mit bestätigtem Modus, AM, oder RLC-Entitäten mit unbestätigtem Modus, UM, für entsprechende Richtungen zugeordnet ist; und
bei einem Multicast-Funkträger, der mit dem RLC-Träger vom Typ 2 konfiguriert ist, jede dem Multicast-Funkträger entsprechende PDCP-Entität der mindestens einen UM-DL-RLC-Entität zugeordnet ist; und
bei einem Multicast-Funkträger, der sowohl mit dem RLC-Träger vom Typ 1 als auch mit dem RLC-Träger vom Typ 2 konfiguriert ist, jede PDCP-Entität, die dem Multicast-Funkträger entspricht, zugeordnet ist zu: der AM-RLC-Entität oder den UM-RLC-Entitäten, und der mindestens einen UM-DL-RLC-Entität.

2. Verfahren nach Anspruch 1, umfassend das Senden einer Multicast-Dienstanforderung an das Netzwerk durch die Vorrichtung zur drahtlosen Kommunikation vor dem Empfangen der Multicast-Funkressourcenkonfiguration.

3. Verfahren nach Anspruch 2, umfassend das Senden der Multicast-Dienstanforderung durch die Vorrichtung zur drahtlosen Kommunikation an eine Multicast-Sitzungsverwaltungsfunktion oder -entität eines Kernnetzwerks.

4. Verfahren nach Anspruch 2, umfassend das Senden der Multicast-Dienstanforderung durch die Vorrichtung zur drahtlosen Kommunikation an einen Knoten des Funkzugangsnetzes, RAN.

5. Verfahren nach Anspruch 1, wobei die Multicast-Funkressourcenkonfigurationsinformationen eine PDCP-Konfiguration einschließen.

6. Verfahren nach Anspruch 1, wobei die Multicast-Funkressourcenkonfigurationsinformationen mindestens eine Operation einschließen, die einer Multicast-Funkträgerkonfiguration oder einem MAC- und PHY-Schichtkonfigurationssatz entspricht, der dem Multicast-Dienst zugeordnet ist.

7. Verfahren nach Anspruch 5, wobei die Multicast-Funkressourcenkonfigurationsinformationen eine Konfiguration des Dienstdatenanpassungsprotokolls, SDAP-Konfiguration, einschließen, wobei die SDAP-Konfiguration eine Multicast-Dienstsitzungskennung zur Identifizierung einer dem Multicast-Dienst entsprechenden Sitzung einschließt.

8. Verfahren nach Anspruch 1, wobei eine Peer-RLC-Entität des Netzwerks zur RLC-Entität, die dem RLC-Träger vom Typ 1 zugeordnet ist, eine bestimmte Vorrichtung zur drahtlosen Kommunikation bedient, die den Multicast-Dienst empfängt, und eine Peer-RLC-Entität des Netzwerks zur RLC-Entität, die dem RLC-Träger vom Typ 2 zugeordnet ist, mindestens eine Vorrichtung zur drahtlosen Kommunikation bedient, die den Multicast-Dienst empfängt.

9. Verfahren nach Anspruch 5,
wobei ein Konfigurationssatz der MAC- und physischen PHY-Schicht für die Multicast-Medienzugriffssteuerung des Multicast-Dienstes mindestens eines einschließt von: einer MAC-Konfiguration mit diskontinuierlichem Empfang, DRX, die dem Multicast-Dienst entspricht, einer Zellkennungsliste, für die der Multicast-Dienst geplant ist, einem Bandbreitenabschnittsindex, BWP-Index, der dem Multicast-Dienst zugeordnet ist, oder einer Konfiguration für einen gemeinsamen physischen Downlink-Datenkanal, PDSCH, und einer Konfiguration für einen physischen Downlink-Steuerkanal, PDCCH; oder
wobei eine Zuordnungsbeziehung zwischen einer physischen Schichtkennung des Multicast-Dienstes und einer Sitzungskennung besteht und die Zuordnungsbeziehung durch dedizierte Signalisierung an eine bestimmte Vorrichtung zur drahtlosen Kommunikation bereitgestellt wird; oder
wobei eine logische Kanalkennung, LCID, die einem RLC-Träger entspricht, mindestens zwei LCID-Werte, Icid2-1 und Icid2-2, einschließt, wobei eine MAC-Entität Dienstdaten in einer empfangenen MAC-PDU an einen durch Icid2-2 identifizierten logischen Kanal sendet, wenn der entsprechende LCID-Wert in einem Unterheader der empfangenen MAC-PDU Icid2-1 ist; oder
wobei die RLC-Trägerkonfiguration und der MAC- und PHY-Schichtkonfigurationssatz über einen Broadcast-Kanal bereitgestellt und in einer Zelle oder durch dedizierte Signalisierung an eine bestimmte Vorrichtung zur drahtlosen Kommunikation gesendet werden; oder
wobei eine Schritt-1-Konfiguration die Multicast-Funkressourcenkonfigurationsinformationen umfasst.

10. Vorrichtung zur drahtlosen Kommunikation, umfassend:
mindestens einen Prozessor, der konfiguriert ist zum:
Empfangen, über einen Empfänger, von Multicast-Funkressourcenkonfigurationsinformationen einschließlich einer Funkverbindungssteuerungs-Trägerkonfiguration, RLC-Trägerkonfiguration, von einem Netzwerk, wobei die RLC-Trägerkonfiguration mindestens einen von einer Vielzahl von RLC-Trägertypen einschließt, wobei die Vielzahl von RLC-Trägertypen i) einen RLC-Träger vom Typ 1 vom Typ Punkt-zu-Punkt, PTP, und ii) einen RLC-Träger vom Typ 2 vom Typ Punkt-zu-Mehrpunkt, PTM, einschließt; und
Konfigurieren eines Luftschnittstellenprotokollstapels der Vorrichtung zur drahtlosen Kommunikation gemäß den Multicast-Funkressourcenkonfigurationsinformationen,
wobei:
bei einem Multicast-Funkträger, der mit dem RLC-Träger vom Typ 1 konfiguriert ist, jede dem Multicast-Funkträger entsprechende PDCP-Entität einer RLC-Entität mit bestätigtem Modus, AM, oder RLC-Entitäten mit unbestätigtem Modus, UM, für entsprechende Richtungen zugeordnet ist; und
bei einem Multicast-Funkträger, der mit dem RLC-Träger vom Typ 2 konfiguriert ist, jede dem Multicast-Funkträger entsprechende PDCP-Entität der mindestens einen UM-DL-RLC-Entität zugeordnet ist; und
bei einem Multicast-Funkträger, der sowohl mit dem RLC-Träger vom Typ 1 als auch mit dem RLC-Träger vom Typ 2 konfiguriert ist, jede PDCP-Entität, die dem Multicast-Funkträger entspricht, zugeordnet ist zu: der AM-RLC-Entität oder den UM-RLC-Entitäten, und der mindestens einen UM-DL-RLC-Entität.

11. Vorrichtung zur drahtlosen Kommunikation nach Anspruch 10, wobei die Multicast-Funkressourcenkonfigurationsinformationen eine PDCP-Konfiguration einschließen.

## Revendications

1. Procédé, comprenant :
la réception, par un dispositif de communication sans fil, d'informations de configuration de ressources radio multidiffusion comportant une configuration de support de contrôle de liaison radio, RLC, provenant d'un réseau, dans lequel la configuration de support RLC comporte au moins l'un d'une pluralité de types de support RLC, la pluralité de types de support RLC comportant i) un support RLC de type 1 étant de type point à point, PTP, et ii) un support RLC de type 2 étant de type point à multipoint, PTM ; et
la configuration, par le dispositif de communication sans fil en fonction des informations de configuration de ressources radio multidiffusion, d'une pile de protocoles d'interface aérienne du dispositif de communication sans fil,
dans lequel :
pour un support radio multidiffusion configuré avec le support RLC de type 1, chaque entité PDCP correspondant au support radio multidiffusion est associée à une entité RLC en mode acquitté, AM, ou à des entités RLC en mode non acquitté, UM, pour des directions correspondantes ; et
pour un support radio multidiffusion configuré avec le support RLC de type 2, chaque entité PDCP correspondant au support radio multidiffusion est associée à l'au moins une entité RLC DL UM ; et
pour un support radio multidiffusion configuré avec le support RLC de type 1 et le support RLC de type 2, chaque entité PDCP correspondant au support radio multidiffusion est associée : à l'entité RLC AM ou aux entités RLC UM, et à l'au moins une entité RLC DL UM.

2. Procédé selon la revendication 1 comprend l'envoi, par le dispositif de communication sans fil, d'une demande de service multidiffusion au réseau, avant la réception de la configuration de ressources radio multidiffusion.

3. Procédé selon la revendication 2, comprenant l'envoi, par le dispositif de communication sans fil, de la demande de service multidiffusion à une fonction ou entité de gestion de session multidiffusion d'un réseau central.

4. Procédé selon la revendication 2, comprenant l'envoi, par le dispositif de communication sans fil, de la demande de service multidiffusion à un nœud de réseau d'accès radio, RAN.

5. Procédé selon la revendication 1, dans lequel les informations de configuration de ressources radio multidiffusion comportent une configuration PDCP.

6. Procédé selon la revendication 1, dans lequel les informations de configuration de ressources radio multidiffusion comportent au moins une opération correspondant à une configuration de support radio multidiffusion ou à un ensemble de configuration de couches MAC et PHY associé au service multidiffusion.

7. Procédé selon la revendication 5, dans lequel les informations de configuration de ressources radio multidiffusion comportent une configuration de protocole d'adaptation de données de service, SDAP, dans lequel la configuration SDAP comporte un identifiant de session de service multidiffusion pour identifier une session correspondant au service multidiffusion.

8. Procédé selon la revendication 1, dans lequel une entité RLC homologue du réseau à l'entité RLC associée au support RLC de type 1 dessert un dispositif de communication sans fil spécifique qui reçoit le service multidiffusion, et une entité RLC homologue du réseau à l'entité RLC associée au support RLC de type 2 dessert au moins un dispositif de communication sans fil qui reçoit le service multidiffusion.

9. Procédé selon la revendication 5,
dans lequel un ensemble de configuration de couches de contrôle d'accès au support MAC et physique PHY de multidiffusion du service multidiffusion comporte au moins l'un parmi : une configuration de réception discontinue, DRX, MAC correspondant au service de multidiffusion, une liste d'identifiants de cellule pour laquelle le service multidiffusion est programmé, un index de partie de bande passante, BWP, associé au service multidiffusion, ou une configuration de canal de données partagé sur liaison descendante physique, PDSCH, et une configuration de canal de contrôle sur liaison descendante physique, PDCCH ; ou
dans lequel il existe une relation de mise en correspondance entre un identifiant de couche physique du service multidiffusion et un identifiant de session, et la relation de mise en correspondance est fournie par le biais d'une signalisation dédiée à un dispositif de communication sans fil spécifique ; ou
dans lequel un identifiant de canal logique, LCID, correspondant à un support RLC comporte au moins deux valeurs LCID, Icid2-1 et Icid2-2, dans lequel une entité MAC soumet des données de service dans un PDU MAC reçu à un canal logique identifié par Icid2-2, si la valeur LCID correspondante dans un sous-en-tête du PDU MAC reçu est Icid2-1 ; ou
dans lequel la configuration du support RLC et l'ensemble de configuration des couches MAC et PHY sont fournis par un canal de diffusion et diffusés dans une cellule, ou par une signalisation dédiée à un dispositif de communication sans fil spécifique ; ou
dans lequel la configuration de l'étape 1 comprend les informations de configuration de ressources radio multidiffusion.

10. Dispositif de communication sans fil, comprenant :
au moins un processeur configuré pour :
recevoir, par l'intermédiaire d'un récepteur, des informations de configuration de ressources radio multidiffusion comportant une configuration de support de contrôle de liaison radio, RLC, provenant d'un réseau, dans lequel la configuration de support RLC comporte au moins l'un d'une pluralité de types de support RLC, la pluralité de types de support RLC comportant i) un support RLC de type 1 étant de type point à point, PTP, et ii) un support RLC de type 2 étant de type point à multipoint, PTM ; et
configurer, en fonction des informations de configuration de ressources radio multidiffusion, une pile de protocoles d'interface radio du dispositif de communication sans fil,
dans lequel :
pour un support radio multidiffusion configuré avec le support RLC de type 1, chaque entité PDCP correspondant au support radio multidiffusion est associée à une entité RLC en mode acquitté, AM, ou à des entités RLC en mode non acquitté, UM, pour des directions correspondantes ; et
pour un support radio multidiffusion configuré avec le support RLC de type 2, chaque entité PDCP correspondant au support radio multidiffusion est associée à l'au moins une entité RLC DL UM ; et
pour un support radio multidiffusion configuré avec le support RLC de type 1 et le support RLC de type 2, chaque entité PDCP correspondant au support radio multidiffusion est associée : à l'entité RLC AM ou aux entités RLC UM, et à l'au moins une entité RLC DL UM.

11. Dispositif de communication sans fil selon la revendication 10, dans lequel les informations de configuration de ressources radio multidiffusion comportent une configuration PDCP.
